# EUROPEAN PATENT APPLICATION

(11) **EP 4 769 283 A1**
(43) Date of publication of application: **01.07.2026**
(21) Application number: 24856266.2
(22) Date of filing: 05.08.2024
(51) Int. Cl.: G06Q 30/0601, G06Q 30/0201, G06Q 30/0282

(54) **INFORMATION PROCESSING DEVICE, METHOD, AND PROGRAM**

(30) Priority: 24.08.2023 JP 2023136567; 29.08.2023 JP 2023139381
(71) Applicant: FUJIFILM Corporation, Tokyo 106-8620 (JP)
(72) Inventor: OSHIMA, Hiroyuki, Saitama-shi, Saitama 331-9624 (JP)
(74) Representative: Parker, Andrew James
(86) International application number: PCT/JP2024/027852
(87) International publication number: WO 2025/041574

(57) **Abstract**

Provided are an information processing apparatus, an information processing method, and an information processing program that can contribute to promoting the sale of image data. An information processing apparatus includes a processor. The processor acquires first image data and first information including information on an evaluation of an image represented by the first image data. The processor analyzes the first image data and classifies the first image data into a plurality of categories. The processor calculates an evaluation value for each of the categories based on the first information. The processor generates second information of second image data based on the evaluation value.

## Description

### BACKGROUND OF THE INVENTION

### 1. Field of the Invention

The present invention relates to an information processing apparatus, an information processing method, and an information processing program, and particularly to an information processing apparatus, an information processing method, and an information processing program that process information related to the sale of image data.

### 2. Description of the Related Art

JP2019-114222A discloses an imaging system that provides information useful for imaging, the imaging system including a setting unit that sets a request representing a photo intended by a user, a transmission unit that transmits the request set by the setting unit to a learning device, the learning device that extracts an image that matches the request and receives a predetermined evaluation from a third party, performs machine learning using the extracted image, and outputs an inference model, a reception unit that receives the inference model output from the learning device, and a display unit that displays a result of inference performed by the inference model.

JP2021-77131A discloses a system that provides advice on an imaging composition in accordance with an evaluation target community, the system including a learning unit that learns evaluations of compositions of a plurality of images posted on a social networking service (SNS), an extraction unit that analyzes an image captured by a terminal operated by a user and extracts feature information, and a notification unit that, in a case where the composition is temporarily designated by an operation of the user, notifies the user of information representing an evaluation that is expected to be given on the SNS for the image captured in accordance with the composition, based on the extracted feature information.

### SUMMARY OF THE INVENTION

One embodiment according to the technology of the present disclosure provides an information processing apparatus, an information processing method, and an information processing program that can contribute to promoting the sale of image data.
(1) An information processing apparatus comprising: a processor configured to: acquire first image data and first information including information on an evaluation of an image represented by the first image data; analyze the first image data and classify the first image data into a plurality of categories; calculate an evaluation value for each of the categories based on the first information; and generate second information of second image data based on the evaluation value.
(2) The information processing apparatus according to (1), in which the second information is information that contributes to promoting sale.
(3) The information processing apparatus according to (1) or (2), in which the first information includes that the image represented by the first image data is viewed, selected, or added to a cart.
(4) The information processing apparatus according to any one of (1) to (3), in which the evaluation is given such that a higher evaluation is given as a period from start of the sale of the image represented by the first image data to purchase of the image represented by the first image data becomes shorter.
(5) The information processing apparatus according to any one of (1) to (4), in which the first information includes information on sales amount as the information on the evaluation.
(6) The information processing apparatus according to (5), in which the evaluation value is an average value of the sales amount.
(7) The information processing apparatus according to any one of (1) to (6), in which the first information includes information on a subject and/or a person who captures an image, and the processor is configured to calculate the evaluation value by weighting the information on the evaluation based on the information on the subject and/or the person who captures the image.
(8) The information processing apparatus according to any one of (1) to (7), in which the second information is information on a priority order of publication in a case where a plurality of the second image data are sold.
(9) The information processing apparatus according to (8), in which the first information includes information on a sales date and time, and the processor is configured to: generate statistical information on the evaluation based on the sales date and time for each of the categories; and generate the second information based on the statistical information on the evaluation.
(10) The information processing apparatus according to any one of (1) to (7), in which the categories are classified based on compositions and/or poses, and the second information is information on a recommended composition and/or pose.
(11) The information processing apparatus according to (10), in which the processor is configured to: extract a composition and/or pose of which the evaluation value is equal to or greater than a threshold value or a rank of the evaluation value is equal to or greater than a threshold value; and generate information on the extracted composition and/or pose as the second information.
(12) The information processing apparatus according to (10) or (11), in which the processor is configured to: acquire information on a sold composition and/or pose; and generate information on an unsold composition and/or pose from the extracted composition and/or pose as the second information.
(13) The information processing apparatus according to any one of (10) to (12), in which the processor is configured to: extract a composition and pose of which the evaluation value is equal to or greater than a threshold value or a rank of the evaluation value is equal to or greater than a threshold value; and generate information obtained by combining the extracted composition and pose as the second information.
(14) The information processing apparatus according to any one of (10) to (13), in which the processor is configured to: acquire information on the number of persons to be imaged at once; extract a composition and/or pose of which the evaluation value is equal to or greater than a threshold value or a rank of the evaluation value is equal to or greater than a threshold value; and generate information on a composition and/or pose corresponding to the number of persons based on information on the extracted composition and/or pose as the second information.
(15) The information processing apparatus according to any one of (1) to (14), in which the categories are classified based on compositions and/or poses, and the second information is information on combinations of compositions and/or poses in a case where a collage image is generated.
(16) An information processing method comprising: acquiring first image data and first information including information on an evaluation of an image represented by the first image data; analyzing the first image data and classifying the first image data into a plurality of categories; calculating an evaluation value for each of the categories based on the first information; and generating second information of second image data based on the evaluation value.
(17) An information processing program causing a computer to execute: a function of acquiring first image data and first information including information on an evaluation of an image represented by the first image data; a function of analyzing the first image data and classifying the first image data into a plurality of categories; a function of calculating an evaluation value for each of the categories based on the first information; and a function of generating second information of second image data based on the evaluation value.

### BRIEF DESCRIPTION OF THE DRAWINGS

FIG. 1 is a conceptual diagram of an image data sales service.
FIG. 2 is a block diagram illustrating an example of a system configuration of an image data sales system.
FIG. 3 is a block diagram illustrating an example of a hardware configuration of a sales server.
FIG. 4 is a block diagram illustrating an example of a hardware configuration of a database server.
FIG. 5 is a block diagram illustrating an example of a hardware configuration of an information processing server.
FIG. 6 is a block diagram illustrating an example of a hardware configuration of a first user terminal.
FIG. 7 is a block diagram illustrating an example of a hardware configuration of a second user terminal.
FIG. 8 is a block diagram illustrating an example of a hardware configuration of a printer.
FIG. 9 is a block diagram of main functions of the first user terminal.
FIG. 10 is a diagram illustrating an example of an operation screen in a case of uploading image data to be sold.
FIG. 11 is a diagram illustrating an example of the operation screen in a case of uploading the image data to be sold.
FIG. 12 is a diagram illustrating an example of the operation screen in a case of uploading the image data to be sold.
FIG. 13 is a block diagram of main functions of the second user terminal.
FIG. 14 is a diagram illustrating an example of screen display in a case of viewing image data on sale.
FIG. 15 is a diagram illustrating an example of the screen display in a case of viewing the image data on sale.
FIG. 16 is a diagram illustrating an example of the screen display in a case of viewing the image data on sale.
FIG. 17 is a diagram illustrating an example of a display screen during printing.
FIG. 18 is a diagram illustrating an example of a display screen after printing is completed.
FIG. 19 is a block diagram of main functions of the sales server.
FIG. 20 is a block diagram of main functions of the information processing server.
FIG. 21 is a conceptual diagram of generation of publication determination information.
FIG. 22 is a block diagram of main functions of a sales processing unit regarding publication determination processing.
FIG. 23 is a conceptual diagram of a method for determining a display rank based on the publication determination information.
FIG. 24 is a flowchart of an operation of the publication determination.
FIG. 25 is a main block diagram of functions of the image data sales system regarding generation and provision of recommendation information.
FIG. 26 is a diagram illustrating an example of display of the recommendation information on the first user terminal.
FIG. 27 is a diagram illustrating an example of a collage image.

### DESCRIPTION OF THE PREFERRED EMBODIMENTS

Hereinafter, preferred embodiments of the present invention will be described in detail with reference to the accompanying drawings.

### [First Embodiment]

Here, as an example, a case where the present invention is applied to a system that provides the following service will be described.

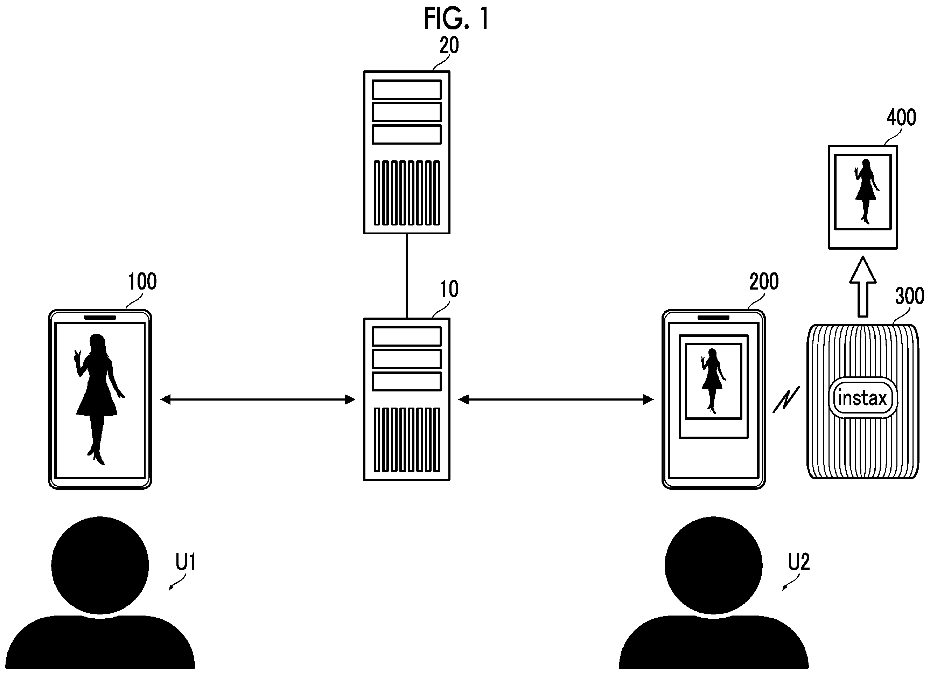

FIG. 1 is a conceptual diagram of the service.

The present service is a service of selling image data for printing online. In the present service, the image data is received from a user (first user) who desires to sell the image data, the received image data is published online, and the image data is sold to a user (second user) who desires to purchase the image data. The user (second user) who has purchased the image data downloads the image data and prints the image data by himself or herself. A photo (which refers to an image in which the image represented by the image data is recorded on a recording medium such as printing paper or a film) is finally obtained by printing.

As illustrated in FIG. 1, a first user U1 who desires to sell the image data uploads the image data to be sold to a sales server 10 by using a first user terminal 100 such as a smartphone.

The sales server 10 records the image data uploaded from the first user U1 in a database server 20. In addition, the sales server 10 publishes the image data recorded in the database server 20 online and sells the image data online.

A second user U2 who desires to purchase the image data views the image data being published by using a second user terminal 200 such as a smartphone. In addition, the second user U2 purchases the image data being published by using the second user terminal 200.

The image data can be downloaded by purchase. The second user U2 downloads the image data from the sales server 10 by using the second user terminal 200, and prints the image data by using a printer 300. By printing, a photo 400 as a printed material is obtained.

The present service is mainly used in a case where a singer, an actor, an entertainer, or the like (first user U1) in the field such as entertainment or music sells the image data for printing to a fan (second user U2). Hereinafter, for convenience, a person such as a singer, an actor, or an entertainer is simply referred to as an entertainer. The entertainer includes a so-called idol. The idol generally refers to a young entertainer supported by teenagers.

In this type of service, even in a case where the same person sells the image data, the image data may have different sales performance depending on the content, the way of publication, or the like.

However, it is difficult to determine or identify the factor that causes the difference in the sales performance. In particular, it is more difficult for a user who is less experienced in selling.

The image data sales system according to the present embodiment is a system that receives the provision of the image data for printing from the user and sells the image data, and is a system that can promote the sale of the image data.

### [System Configuration of Image Data Sales System]

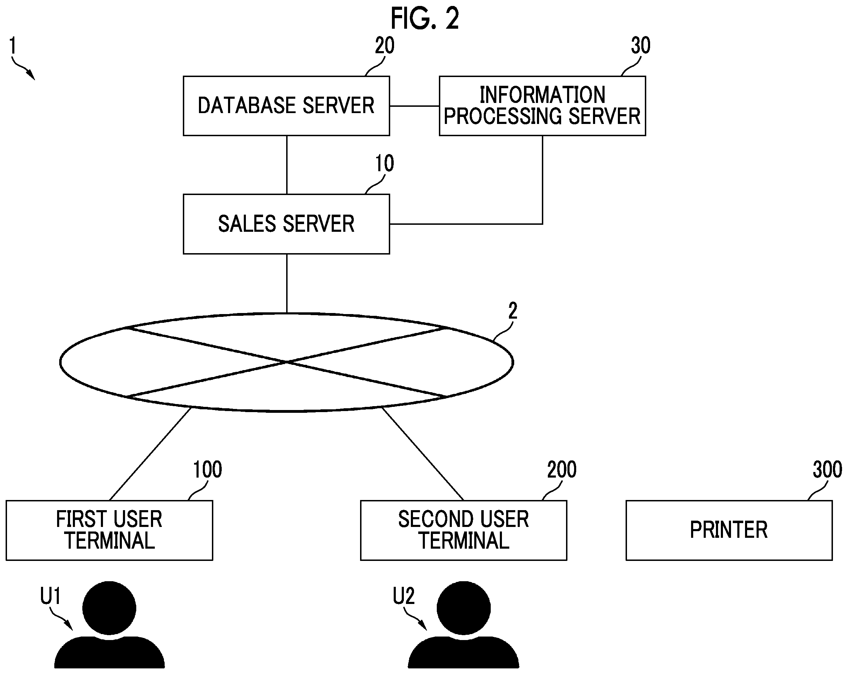

FIG. 2 is a block diagram illustrating an example of a system configuration of the image data sales system.

An image data sales system 1 according to the present embodiment is configured as a system that receives the provision of the image data from the user (first user) who desires to sell the image data, publishes the received image data, and sells the image data to the user (second user) who desires to purchase the image data. The user (second user) who has purchased the image data prints the image data by himself or herself.

For example, in a case where the entertainer sells the image data for printing, the entertainer is the first user, and a fan of the entertainer is the second user.

As illustrated in FIG. 2, the image data sales system 1 is mainly configured by the sales server 10, a database server 20, an information processing server 30, the first user terminal 100 used by the first user U1, the second user terminal 200 used by the second user U2, the printer 300, and the like.

The sales server 10 and the first user terminal 100 are communicably connected via a network 2. Similarly, the sales server 10 and the second user terminal 200 are communicably connected via the network 2. The network 2 is constructed by, for example, a wireless communication network such as 4th Generation (4G), 5th Generation (5G), Worldwide Interoperability for Microwave Access (WiMAX), and Long Term Evolution (LTE), and respective base stations, as well as the Internet.

In addition, the sales server 10, the database server 20, and the information processing server 30 are communicably connected by wired or wireless communication. As an example, in the present embodiment, the sales server 10, the database server 20, and the information processing server 30 are connected by a local area network (LAN).

In addition, the second user terminal 200 and the printer 300 are communicably connected by wired or wireless communication. As an example, in the present embodiment, the second user terminal 200 and the printer 300 are wirelessly connected by Bluetooth (registered trademark).

### [Hardware Configuration of Sales Server]

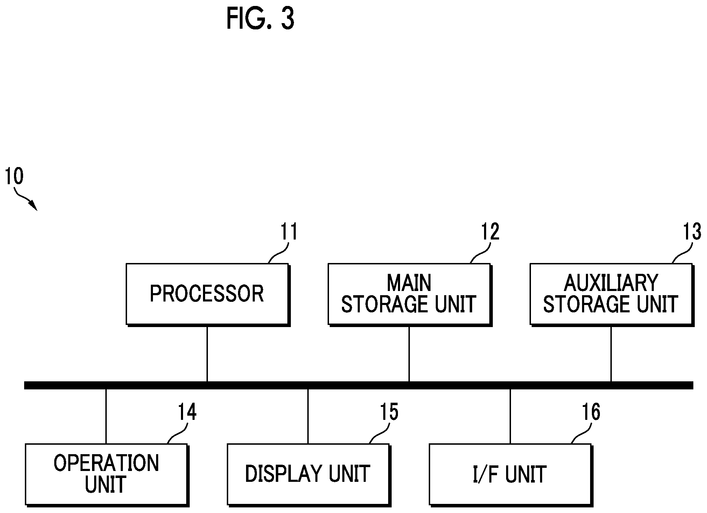

FIG. 3 is a block diagram illustrating an example of a hardware configuration of the sales server.

The sales server 10 has a configuration as a general server computer. That is, the sales server 10 includes a processor 11, a main storage unit 12, an auxiliary storage unit 13, an operation unit 14, a display unit 15, an interface unit 16, and the like.

The processor 11 executes a program to function as various types of processing units. As an example, in the present embodiment, the processor 11 is configured by a central processing unit (CPU). Various programs and data executed by the processor 11 are stored in the main storage unit 12 and/or the auxiliary storage unit 13. The program is synonymous with software.

The main storage unit 12 includes a random-access memory (RAM) and a read-only memory (ROM). The RAM is used as a work area for the processor 11. The ROM stores a basic input/output program and the like.

The auxiliary storage unit 13 is configured, for example, by a hard disk drive (HDD) and a solid state drive (SSD).

The operation unit 14 is configured, for example, by a keyboard and a mouse.

The display unit 15 is configured, for example, by a liquid crystal display (LCD), and an organic electro luminescence diode display (OLED display).

The interface unit 16 includes a communication interface for connecting the sales server 10 to the network 2, a communication interface for connecting the sales server 10 to the database server 20, and a communication interface for connecting the sales server 10 to the information processing server 30.

### [Hardware Configuration of Database Server]

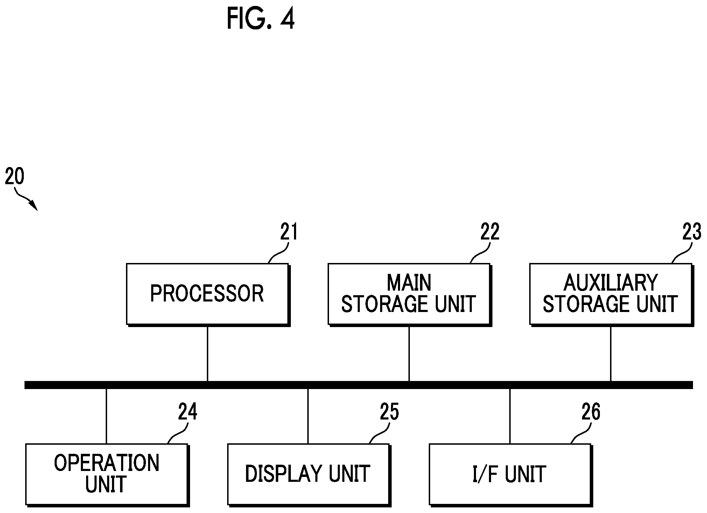

FIG. 4 is a block diagram illustrating an example of a hardware configuration of the database server.

The database server 20 has a configuration as a general server computer, like the sales server 10. That is, the database server 20 includes a processor 21, a main storage unit 22, an auxiliary storage unit 23, an operation unit 24, a display unit 25, an interface unit 26, and the like. Since the configurations of the respective units are substantially the same as those of the sales server 10, the description thereof will be omitted.

### [Hardware Configuration of Information Processing Server]

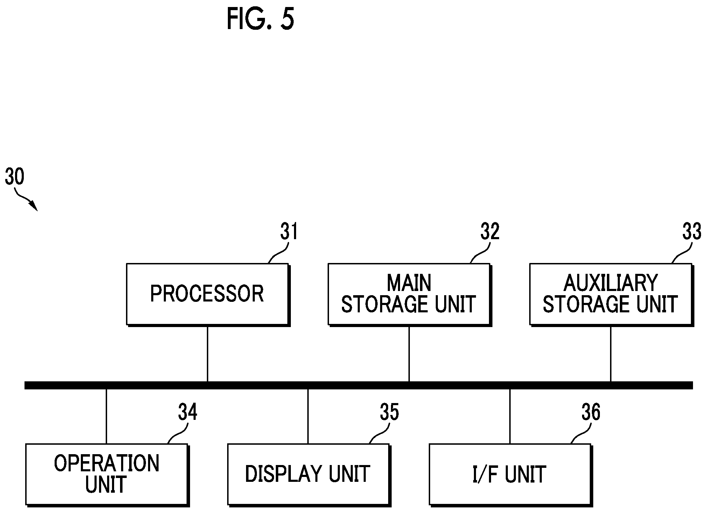

FIG. 5 is a block diagram illustrating an example of a hardware configuration of the information processing server.

The information processing server 30 has a configuration as a general server computer, like the sales server 10. That is, the information processing server 30 includes a processor 31, a main storage unit 32, an auxiliary storage unit 33, an operation unit 34, a display unit 35, an interface unit 36, and the like. Since the configurations of the respective units are substantially the same as those of the sales server 10, the description thereof will be omitted.

### [Hardware Configuration of First User Terminal]

The first user terminal 100 is configured by a computer having a communication function. The first user terminal 100 is preferably configured by a mobile computer such as a smartphone or a tablet terminal. The first user terminal 100 is more preferably configured by a mobile computer having a camera function (imaging function). As an example, in the present embodiment, the first user terminal 100 is configured by the smartphone having the camera function.

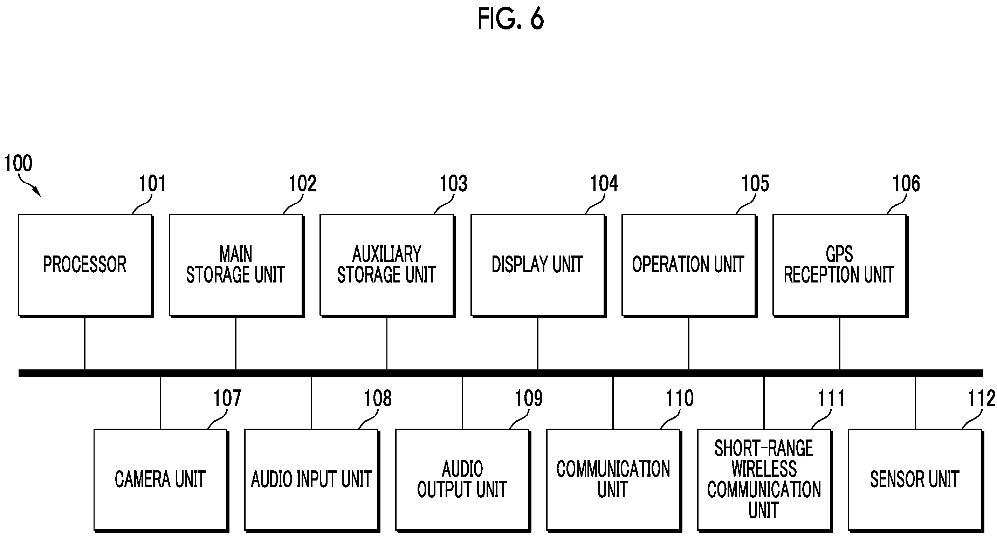

FIG. 6 is a block diagram illustrating an example of a hardware configuration of the first user terminal. FIG. 6 illustrates an example of a case where the first user terminal 100 is configured by the smartphone.

As illustrated in FIG. 6, the first user terminal 100 comprises a processor 101, a main storage unit 102, an auxiliary storage unit 103, a display unit 104, an operation unit 105, a global positioning systems (GPS) reception unit 106, a camera unit 107, an audio input unit 108, an audio output unit 109, a communication unit 110, a short-range wireless communication unit 111, a sensor unit 112, and the like.

The processor 101 executes a program to function as various types of processing units. As an example, in the present embodiment, the processor 101 is configured by a CPU. Various programs and data executed by the processor 101 are stored in the main storage unit 102 and/or the auxiliary storage unit 103.

The main storage unit 102 includes a RAM and a ROM. The RAM is used as a work area for the processor 101. The ROM stores a basic input/output program and the like.

The auxiliary storage unit 103 is configured, for example, by a flash memory such as an electrically erasable and programmable ROM (EEPROM).

The display unit 104 is configured, for example, by a liquid crystal display and an organic EL display.

The operation unit 105 includes a touch panel and various operation buttons. The touch panel detects a touch operation performed on a screen of the display unit 104.

The GPS reception unit 106 receives a GPS signal including positional information of the first user terminal 100.

The camera unit 107 includes an imaging lens and an image sensor, and electronically captures the image.

The audio input unit 108 includes a microphone, and receives audio input.

The audio output unit 109 includes a speaker, and outputs audio.

The communication unit 110 communicates wirelessly with the nearest base station or the like using an antenna.

The short-range wireless communication unit 111 communicates with an external device wirelessly in a short range using an antenna.

The sensor unit 112 includes various sensors such as a geomagnetic sensor, a gyrocompass, and an acceleration sensor.

### [Hardware Configuration of Second User Terminal]

The second user terminal 200 is configured by a computer having a communication function. The second user terminal 200 is preferably configured by a mobile computer such as a smartphone or a tablet terminal. As an example, in the present embodiment, the second user terminal 200 is configured by the smartphone.

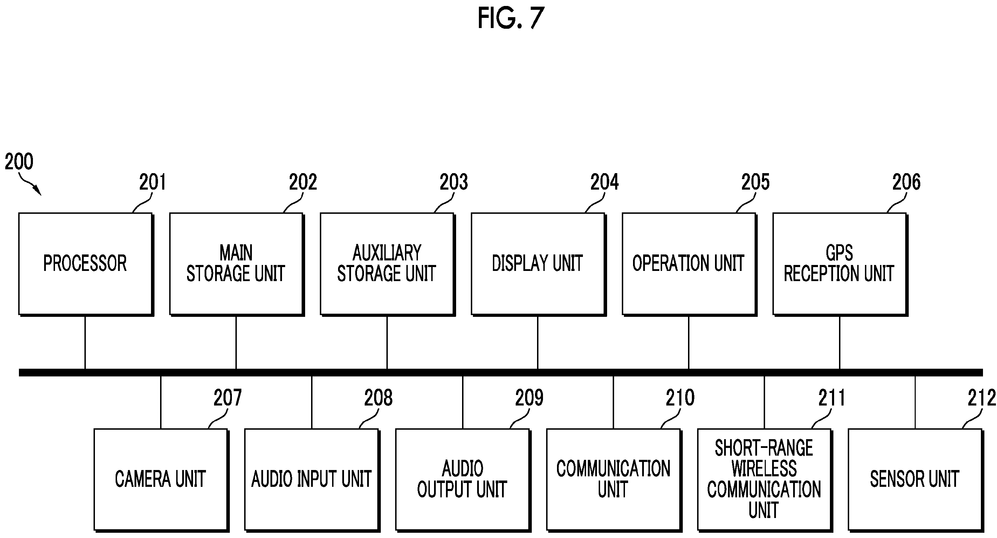

FIG. 7 is a block diagram illustrating an example of a hardware configuration of the second user terminal. FIG. 7 illustrates an example of a case where the second user terminal 200 is configured by the smartphone.

The second user terminal 200 comprises a processor 201, a main storage unit 202, an auxiliary storage unit 203, a display unit 204, an operation unit 205, a GPS reception unit 206, a camera unit 207, an audio input unit 208, an audio output unit 209, a communication unit 210, a short-range wireless communication unit 211, a sensor unit 212, and the like, like the first user terminal 100. Since the functions of the respective units are substantially the same as those of the first user terminal 100, the description thereof will be omitted.

In the present embodiment, the second user terminal 200 is connected to the printer 300 via the short-range wireless communication unit 211. The short-range wireless communication unit 211 is connected to the printer 300 by, for example, Bluetooth (registered trademark).

### [Hardware Configuration of Printer]

The printer 300 receives a print request from the second user terminal 200, which is a connection destination, and prints the image on the recording medium. A printing method, a type of the recording medium to be used, and the like are not particularly limited. In the present embodiment, as an example, a case where the printer 300 is configured by a so-called instant film type printer will be described. The instant film type printer is a printer that uses an instant film as the recording medium. In addition, in the present embodiment, as an example, a case where the printer 300 is configured by a so-called mobile printer will be described. The mobile printer generally means a small and portable printer that can be carried.

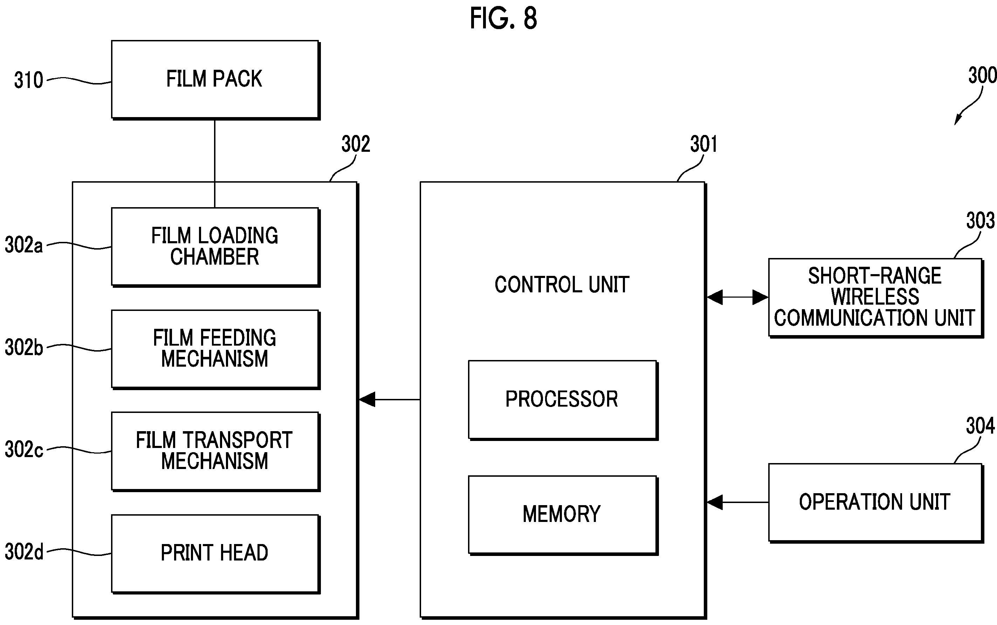

FIG. 8 is a block diagram illustrating an example of a hardware configuration of the printer.

As illustrated in FIG. 8, the printer 300 comprises a control unit 301, a print unit 302, a short-range wireless communication unit 303, an operation unit 304, and the like.

The control unit 301 controls the overall operation of the printer 300. The control unit 301 is configured, for example, by a microcomputer comprising a processor and a memory. For example, the processor is configured by a CPU. The memory includes a RAM, a ROM, an EEPROM, and the like. The ROM and/or the EEPROM store a program executed by the processor and various types of data required for control.

The print unit 302 prints an image on the instant film under the control of the control unit 301. The print unit 302 includes a film loading chamber 302a, a film feeding mechanism 302b, a film transport mechanism 302c, a print head 302d, and the like.

The film loading chamber 302a is an instant film loading section. The instant film is loaded into the film loading chamber 302a in the form of, for example, a film pack 310. The film pack 310 contains the instant film in a predetermined cartridge. A plurality of (for example, 10) instant films are contained in the cartridge in a stacked state. For example, as the instant film, a monosheet type (sheet film system) instant film is used. A structure of the instant film and the film pack 310 of this type is known, for example, as an instant film and the film pack 310 used in an instant camera (INSTAX (registered trademark), product name "CHEKI") manufactured by FUJIFILM Corporation.

The film feeding mechanism 302b feeds the instant film one by one from the film pack 310 loaded in the film loading chamber 302a.

The film transport mechanism 302c transports the instant film fed by the film feeding mechanism 302b from the film pack 310.

The print head 302d is configured, for example, by a line-type exposure head. The print head 302d records the image by irradiating an exposure surface of the instant film transported by the film transport mechanism 302c with print light line by line.

The instant film on which the image is recorded is developed during the transport process, and is discharged from a predetermined discharge port.

The short-range wireless communication unit 303 communicates with an external device (in the present embodiment, the second user terminal 200) wirelessly in a short range using an antenna. In the present embodiment, the printer 300 and the second user terminal 200 are communicably connected by Bluetooth (registered trademark).

The operation unit 304 includes various operation buttons required for operating the printer 300, in addition to a power button.

The printer 300 may have functions other than printing. For example, the printer 300 may include the imaging function (camera function) (so-called camera-equipped printer). The camera-equipped printer functions as a so-called external printer and also functions as a digital camera, and can print a captured image on the spot.

### [Function of First User Terminal]

The first user terminal 100 is a terminal used by the first user U1 as described above. The first user U1 is a person who sells the image data using the image data sales system 1. The first user terminal 100 is mainly used to provide the image data to be sold.

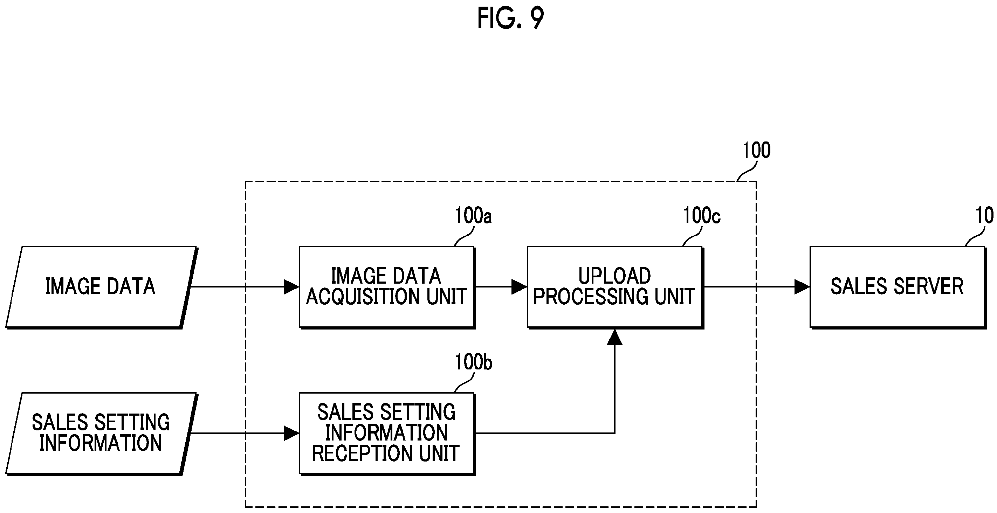

FIG. 9 is a block diagram of the main functions of the first user terminal.

As illustrated in FIG. 9, the first user terminal 100 has the functions of an image data acquisition unit 100a, a sales setting information reception unit 100b, an upload processing unit 100c, and the like regarding the provision of the image data to be sold.

The image data acquisition unit 100a performs processing of acquiring the image data to be sold. The image data to be sold is acquired by, for example, the camera unit 107 provided in the first user terminal 100. That is, the image data to be sold is acquired by image capturing via the camera unit 107. In addition, the image data to be sold may be acquired in the form of being imported from the external device. The external device includes an imaging device (digital camera or the like) as well as an external storage (for example, a memory card). Therefore, for example, the image data captured by the external digital camera can also be used as the image data to be sold. A method for importing the image data from the external device is not particularly limited.

The sales setting information reception unit 100b performs processing of receiving an input of various types of information required for selling the image data. The sales setting information includes, for example, information on a sales period set for the image data to be sold, information on a sales price, and the like. The sales setting information reception unit 100b displays a predetermined input screen on the display unit 104, and receives an input of the sales setting information from the user.

The upload processing unit 100c performs processing of uploading the image data to be sold and the sales setting information thereof to the sales server 10. The upload processing unit 100c uploads the image data to be sold and the sales setting information thereof in association with identification information of the user. The identification information is configured, for example, by a user account. The user account is set, for example, in a case where the user applies for using the service. In a case where the user account is set, various types of information on the user are requested to be input, and the input information is recorded in the database server 20 in association with the user account. For example, an input of information such as identification (ID), a password, an account name (name, Roman letters, or Katakana name), a self-introduction, a profile image, a birthday, a hometown, a uniform resource locator (URL) of a website, and a URL of an SNS is requested. The profile image refers to an image set in a profile. The profile image is usually composed of an image (face image and the like) showing the user.

The uploading is performed in response to an execution instruction from the first user U1. The upload processing unit 100c displays a predetermined operation screen on the display unit 104 and receives an execution instruction to perform the uploading from the first user U1.

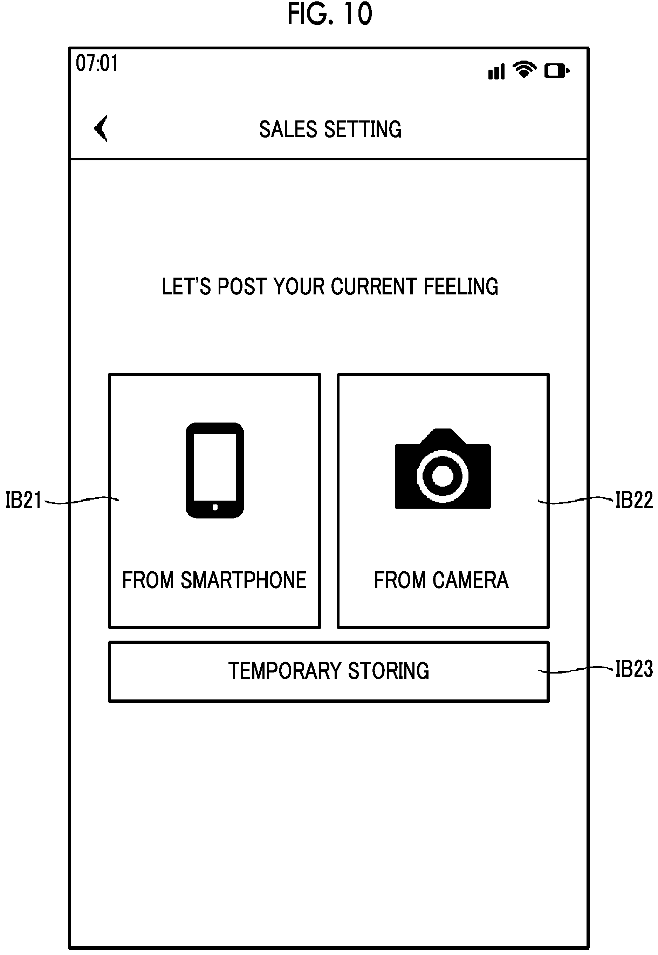

FIGS. 10 to 12 are diagrams illustrating examples of the operation screen in a case of uploading the image data to be sold.

FIG. 10 illustrates an example of a screen for selecting a method for acquiring the image data.

FIG. 10 illustrates an example of a case where three methods are prepared as the method for acquiring the image data. The first method is a method for capturing and acquiring the image data using the first user terminal 100. The second method is a method for acquiring the image data from an external camera. The third method is a method for acquiring the image data from captured image data (image data stored in the first user terminal 100). In a case where the image data is acquired using the first method, a button IB21 is tapped. In a case where the image data is acquired using the second method, a button IB22 is tapped. In a case where the image data is acquired using the third method, a button IB23 is tapped.

In a case where the first method is selected, the camera unit 107 of the first user terminal 100 is activated, and the image can be captured.

In a case where the second method is selected, a setting for connection to the external camera is performed, and the image data is imported from the connected camera.

In a case where the third method is selected, the captured image data (image data stored in the first user terminal 100) is displayed as a list on the screen of the display unit 104, and the image can be selected.

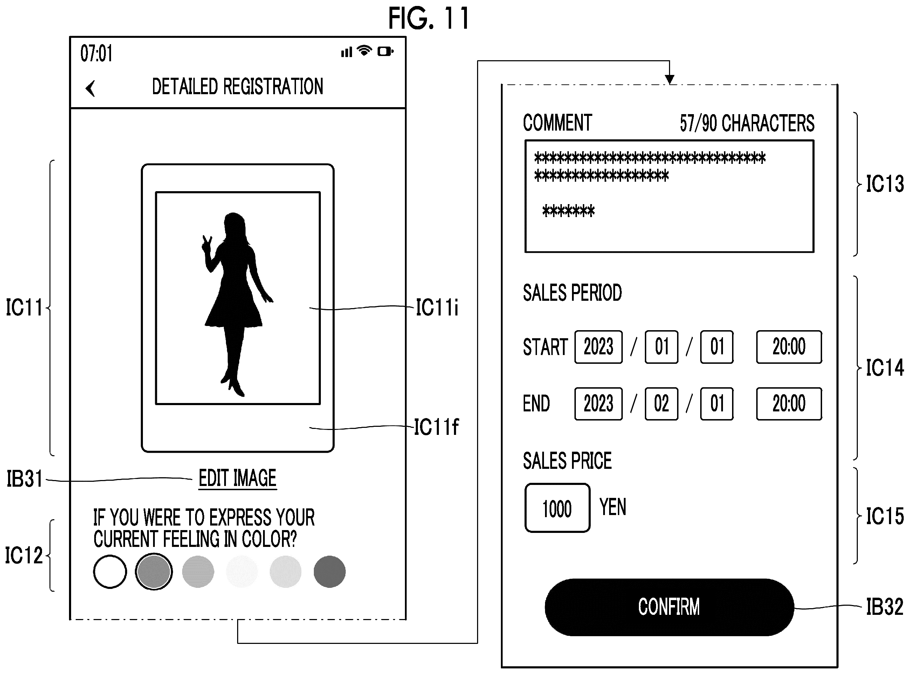

In a case where the image data to be sold is acquired, the screen transitions to the screen of FIG. 11.

FIG. 11 illustrates an example of a screen for inputting the sales setting information.

FIG. 11 illustrates an example of a case where information on a color, a comment, information on the sales period, and information on the sales price are input as the sales setting information.

Here, the "information on the color" is information that expresses the user's feelings at the time of uploading (posting) in color. In the example illustrated in FIG. 11, a configuration in which the color is selected from among six colors (white, red, orange, yellow, blue green, and purple) determined in advance is adopted. The default color is white. Therefore, in a case where the color is not selected, the information on the color is automatically set to white.

The "comment" is a user's comment on the image to be sold.

The "sales period" is a period during which the image data is sold. A start date and time and an end date and time of the sale are designated. The sales period can also be automatically set. For example, a configuration in which the sales period is automatically set for a certain period (for example, 10 minutes) from the time of the uploading can be adopted. In addition, for example, a configuration in which only the start date and time is designated and the sales period is automatically set may be adopted. For example, a configuration in which the sales period is automatically set for 10 minutes from the designated start date and time can be adopted.

The "sales price" is a price required for printing the image data.

As illustrated in FIG. 11, on the screen, a display field IC11 for the image represented by the image data to be sold, an input field IC12 for the information on the color, an input field IC13 for the comment, an input field IC14 for the sales period, and an input field IC15 for the sales price are provided.

A predetermined frame IC11f is displayed in the display field IC11 for the image, and an image IC11i represented by the image data to be sold is displayed within the frame IC11f. The frame IC11f is composed of an image that simulates a frame of the instant film. Therefore, the image is displayed in the display field IC11 in the form that simulates the print result.

In this example, it is also possible to edit images, and in a case where a button IB31 of "Edit image" displayed on the screen is tapped, the screen transitions to an image editing screen, and the image can be edited (processed). Although the detailed description of the image editing will be omitted, the image editing includes, in addition to general retouching functions (such as brightness adjustment, chroma saturation adjustment, sharpness adjustment, and trimming), a drawing function (also referred to as drawing or painting). Therefore, handwritten characters such as a signature and a message can be added to the image by performing the image editing.

The selectable colors are displayed as a list in the input field IC12 for the information on the color. FIG. 11 illustrates an example of a case where circles filled with the selectable colors are displayed in a horizontal row. The user taps the circle of a desired color to select the color.

A predetermined frame is displayed in the input field IC13 for the comment. The user inputs the comment in the frame using a character input function provided in the first user terminal 100.

In the input field IC14 for the sales period, input fields for the start date and time and the end date and time of the sale are provided. The user inputs the start date and time and the end date and time of the sale to each input field. The user inputs the information on the date and time using, for example, the character input function provided in the first user terminal 100. Additionally, a calendar and a clock may be displayed to allow the selection of the date and time. In addition, the selectable dates and times may be displayed via a pull-down menu such that the date and time can be selected.

A frame for inputting the price is displayed in the input field IC15 for the sales price. The user inputs the selling price (price required for printing) in the frame. The user inputs a numerical value in the frame using the character input function provided in the first user terminal 100. In addition, the selectable numerical values may be displayed via a pull-down menu such that the numerical value can be selected.

A button IB32 for confirming the input content is also displayed on the screen for inputting the sales setting information. The button IB32 for confirming is displayed, for example, at a position of an end of the screen (a final position in a case of scrolling). The button IB32 for confirming is enabled in a case where the input into all the input fields is completed. Therefore, in a case where there is an unfilled input field, the button IB32 for confirming is not responsive to the tap. In addition, the color of the button IB32 for confirming is changed in a case where the input into all the input fields is completed. For example, the color is changed from gray to black. As a result, it is possible to visually confirm that the input into all the input fields is completed.

In a case where the input into all the input fields is completed and the button IB32 for confirming is tapped, the screen transitions to a screen for confirming the input content.

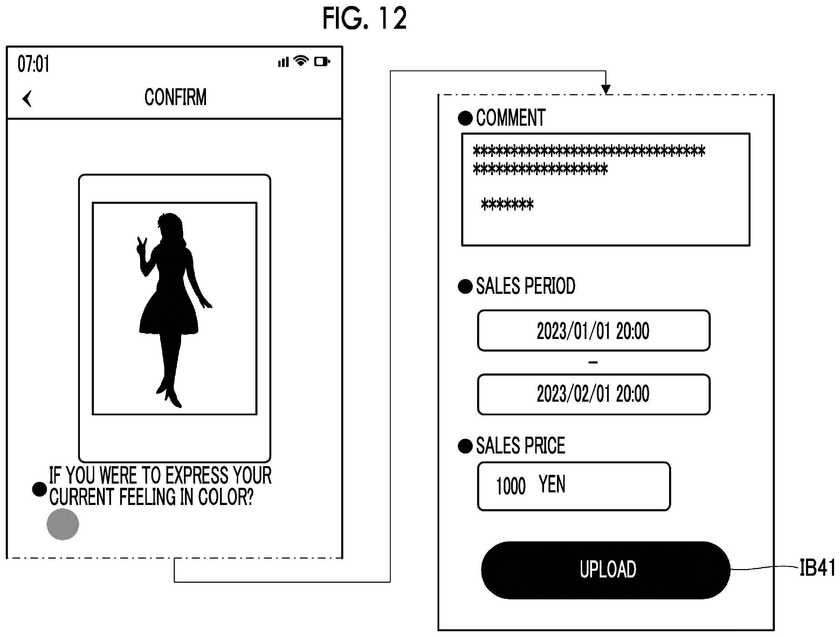

FIG. 12 illustrates an example of the screen of confirming.

As illustrated in FIG. 12, on the screen for confirming the input content, the image represented by the image data to be sold and the information (information on the color, the comment, the sales period, and the sales price) input as the sales setting information are displayed.

In addition, as illustrated in FIG. 12, a button IB41 for uploading is also displayed on the screen for confirming the input content. The button IB41 for uploading is displayed, for example, at an end of the screen.

In a case where there is no error in the input content, the user taps the button IB41 for uploading. In a case where the button IB41 for uploading is tapped, an instruction to execute the uploading is issued. As a result, the image data to be sold and the sales setting information thereof are uploaded to the sales server 10.

In a case where there is an error in the input sales setting information, the user returns to the screen for inputting the sales setting information, and corrects the input information of the corresponding part.

In the present embodiment, the image data that the first user sells or attempts to sell is an example of second image data.

### [Function of Second User Terminal]

The second user terminal 200 is a terminal used by the second user U2 as described above. The second user U2 is a person who purchases the image data. The second user terminal 200 is mainly used to view and purchase the image data. In addition, in the system according to the present embodiment, a purchaser himself or herself prints the image data. Therefore, the second user terminal 200 is used to download and print the purchased image data.

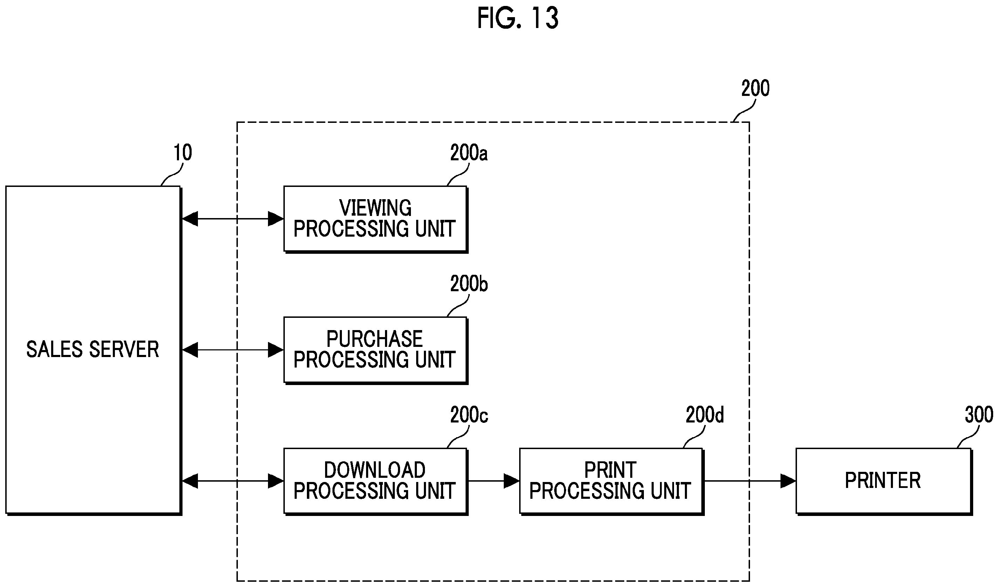

FIG. 13 is a block diagram of the main functions of the second user terminal.

The second user terminal 200 performs processing of viewing and purchasing the image data on sale, processing of downloading the purchased image data, processing of printing the downloaded image data on the printer 300, and the like. Regarding these kinds of processing, the second user terminal 200 has the functions of a viewing processing unit 200a, a purchase processing unit 200b, a download processing unit 200c, a print processing unit 200d, and the like.

The viewing processing unit 200a performs processing of viewing the image data published by the sales server 10 as the image data on sale. The image data is published in the same manner as a so-called web page. Therefore, the viewing processing unit 200a has the same function as a web browser, and displays a page in which the image on sale is displayed in a predetermined format on the display unit 204.

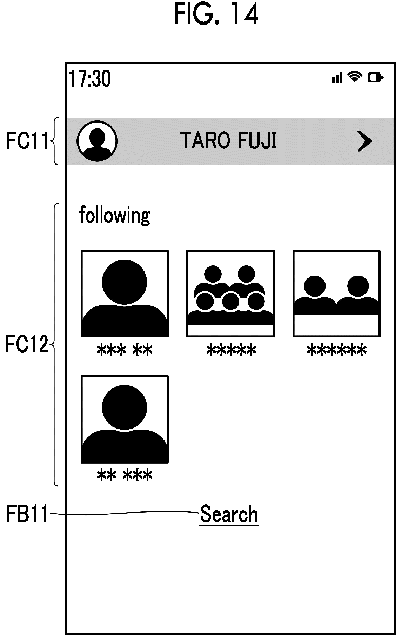

FIGS. 14 to 16 are diagrams illustrating examples of screen display in a case of viewing the image data on sale.

The image is viewed, for example, on a seller basis. That is, the image is displayed on a user (first user) basis who sells the image.

FIG. 14 illustrates an example of display of a so-called home screen (home page).

The home screen is a first screen that is displayed after predetermined user authentication is performed. The user authentication is the act of identifying the user who is registered in advance in the system. The user authentication itself is a known technique, and thus the description thereof will be omitted. As an example, the user authentication is performed by inputting an ID and a password that are registered in advance.

As illustrated in FIG. 14, on the home screen, a display field FC11 for the user, a display field FC12 for the user being followed, a search button FB11, and the like are displayed.

The display field FC11 for the user displays information on the user. In this example, the name of the user is displayed. The "user" here is a person who views or purchases the image data on sale using the second user terminal 200. Accordingly, the user here is the second user.

In the display field FC12 for the user being followed, the users followed by the user are displayed as a list. In this example, the profile images of the users followed by the user are displayed as a list.

Here, the "follow" means registering so that the user can view posts of another user that the user likes. The "follow" is substantially synonymous with "favorite".

The search button FB11 is a button that issues an instruction to search for the user who sells the image data. In a case where the search button FB11 is tapped, the screen transitions to a search screen. The search itself is a known technique, and thus the description thereof will be omitted here. By transitioning to the search screen, it is possible to search for a specific user (seller).

In the home screen illustrated in FIG. 14, in a case where one of the profile images of the users displayed in the display field FC12 for the user being followed is tapped and selected, the screen transitions to a screen (individual user information screen) that displays the information on the selected user. In a case where the specific user is selected from the search result or the like, the screen also transitions to the same screen (individual user information screen).

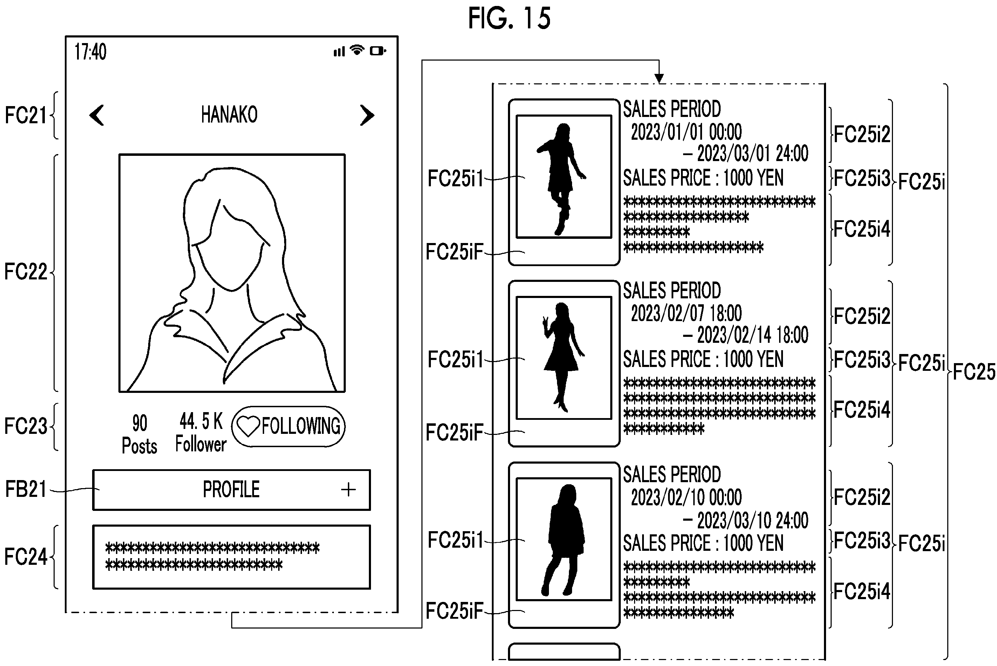

FIG. 15 illustrates an example of display of the individual user information screen.

As illustrated in FIG. 15, on the individual user information screen, a display field FC21 for the information on the seller, a display field FC22 for the profile image, a display field FC23 for the information on the sales count and the follower count, a profile button FB21, a display field FC24 for the message, a display field FC25 for the information on the image data on sale, and the like are displayed.

The display field FC21 for the information on the seller is a field in which the information on the seller is displayed. In this example, the name of the seller is displayed. The seller is a user who sells the image data in the present system, which is the first user.

The display field FC22 for the profile image is a field in which the profile image registered by the seller is displayed.

In the display field FC23 for the information on the sales count and the follower count, information on the total number (sales count) of image data that the seller has sold (posted) so far and information on the total number (follower count) of users who follow the seller are displayed.

The profile button FB21 is a button that issues an instruction to display the profile of the seller. In a case where the profile button FB21 is tapped, the profile of the seller is displayed. The profile is displayed by, for example, a pull-down or a pop-up.

In the display field FC24 for the message, the message posted by the seller is displayed.

The display field FC25 for the information on the image data on sale displays a list of information FC25i on the image data on sale.

The information FC25i on the image data on sale includes an image FC25i1 represented by the image data on sale, information FC25i2 on the sales period of the image data on sale, information FC25i3 on the sales price of the image data on sale, and information FC25i4 on the comment added to the image data on sale. The information FC25i2 on the sales period, the information FC25i3 on the sales price, and the information FC25i4 on the comment are displayed adjacent to the image FC25i1 represented by the image data on sale. In the example illustrated in FIG. 15, the information FC25i2 on the sales period, the information FC25i3 on the sales price, and the information FC25i4 on the comment are displayed side by side adjacent to the image FC25i1 represented by the image data on sale. In addition, the image FC25i1 represented by the image data on sale is displayed in a predetermined frame FC25iF. The frame FC25iF is composed of an image that simulates the frame of the instant film.

In a case where there are a plurality of image data on sale, the information FC25i on the image data on sale is displayed in a single row along a scroll direction of the screen. Therefore, in the present embodiment, the information FC25i on the image data on sale is displayed in order by scrolling the screen.

The number of pieces of the information FC25i on the image data on sale that can be displayed at once is determined by a screen size of the display unit 204, a display size of the image FC25i1, and the like.

In a case where one of pieces of the information FC25i displayed in the display field FC25 for the information on the image data on sale is tapped, the screen transitions to a screen (detailed display screen) that displays details of the tapped image data. The act of transitioning the screen to the detailed display screen is an example of selection of the image data.

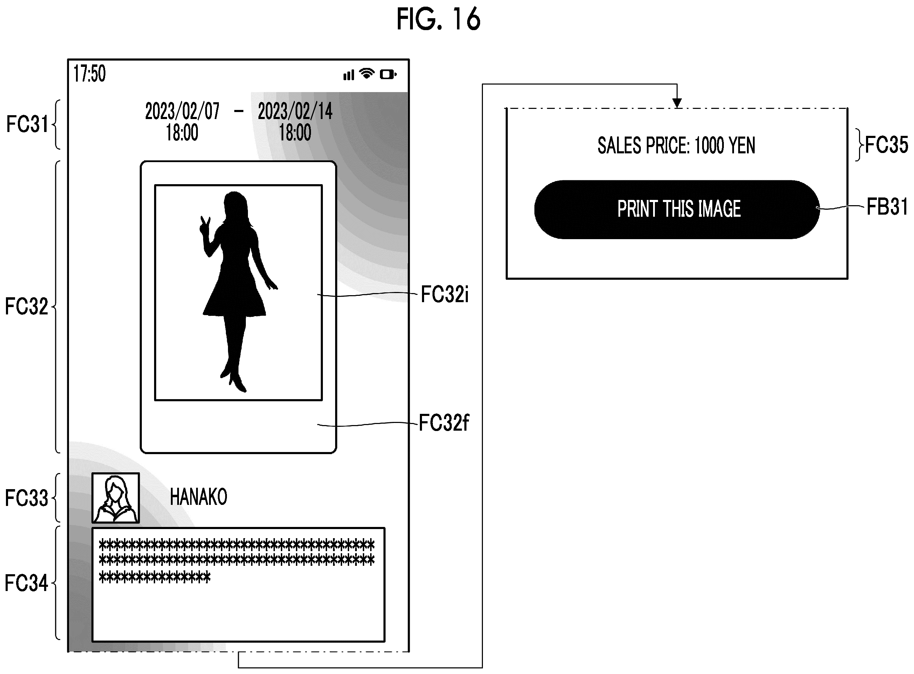

FIG. 16 is a diagram illustrating an example of the detailed display screen.

The detailed display screen is a screen that displays details of the image data selected on the individual user information screen. Displaying the detailed display screen is an example of viewing the displayed image data.

As illustrated in FIG. 16, on the detailed display screen, a display field FC31 for the information on the sales period, a display field FC32 for the image represented by the image data, a display field FC33 for the information on the seller, a display field FC34 for the comment, a display field FC35 for the information on the sales price, a print button FB31, and the like are displayed.

The display field FC31 for the information on the sales period displays the information on the sales period. In this example, the information on the start date and time and the end date and time of the sale is displayed. In addition, a configuration may be adopted in which information on the end date and time of the sale and the remaining time until the sale ends is displayed.

A predetermined frame FC32f is displayed in the display field FC32 for the image, and an image FC32i represented by the image data for printing is displayed in the frame FC32f. The frame FC32f is composed of an image that simulates the frame of the instant film.

The display field FC33 for the information on the seller is a field in which the information on the seller is displayed. In this example, the name of the seller and an icon image of the seller are displayed. The icon image is composed of, for example, an image in which the profile image is reduced and displayed.

In the display field FC34 for the comment, the comment added by the seller in a case where the image data displayed on the detailed display screen is uploaded is displayed.

The display field FC35 for the information on the sales price displays a price required for printing the image data displayed on the detailed display screen.

The print button FB31 is a button for application for printing of the image data displayed on the detailed display screen. In a case where the print button FB31 is tapped, the application for printing is made. The application for printing is synonymous with an expression of the intention to purchase. Further, the application for printing is substantially synonymous with adding the image data to a cart. In addition, the act of applying for printing of the image data is another example of viewing and/or selecting the image data.

The purchase processing unit 200b performs payment processing with the sales server 10 in response to the expression of the intention to purchase (tapping of the print button FB31 on the detailed display screen) from the user. Since the payment processing itself is a known technique, the description thereof will be omitted here.

In a case where the payment processing is completed, the image data displayed on the detailed display screen can be downloaded and printed by the printer 300.

On the detailed display screen, at least a part of the background is displayed in a predetermined color as illustrated in FIG. 16. The displayed color is a color selected by the seller of the image data displayed on the detailed display screen in a case where the image data is uploaded.

The download processing unit 200c performs processing of downloading the image data of which the payment processing is completed from the sales server 10 in cooperation with the sales server 10.

The print processing unit 200d performs processing of printing the downloaded image data in cooperation with the printer 300. As a premise of the print processing, it is required that the second user terminal 200 is connected to the printer 300.

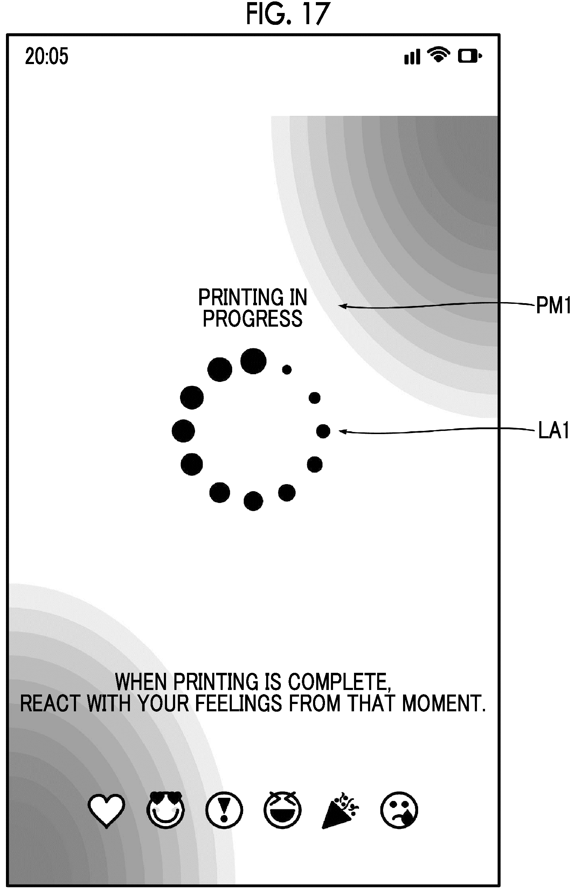

FIG. 17 is a diagram illustrating an example of a display screen during the printing.

In a case where the printing is started by the printer 300, a screen (printing-in-progress screen) illustrated in FIG. 17 is displayed on the display unit 204.

A message PM1 indicating that the printing is in progress is displayed on the printing-in-progress screen. Further, an animation LA1 (so-called loading animation) indicating that the printing is in progress is displayed. In the example illustrated in FIG. 17, an animation in which circles (dots) arranged at regular intervals on the same circumference rotate along the circumference is displayed.

In addition, in the printing-in-progress screen, a part of the background is displayed in a predetermined color. The displayed color is a color selected by the seller of the image data being printed in a case where the image data is uploaded.

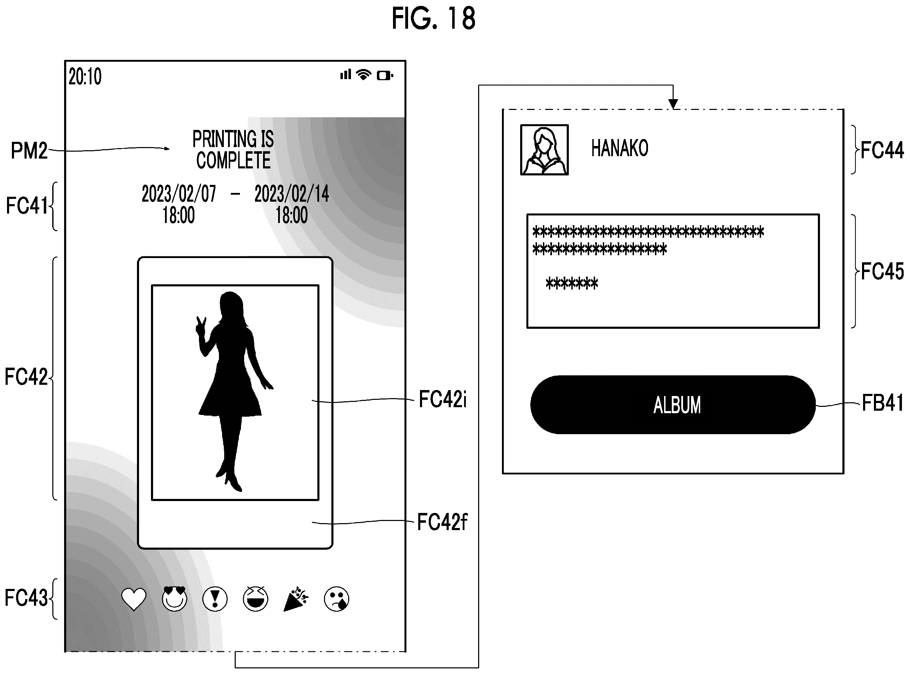

FIG. 18 is a diagram illustrating an example of a display screen after the printing is completed.

In a case where the printing by the printer 300 is completed, a screen (print completion screen) illustrated in FIG. 18 is displayed.

In a case where the printing is completed, the printer 300 outputs the information (print completion notification) to the second user terminal 200. In a case where the print completion notification is received from the printer 300, the second user terminal 200 displays the print completion screen on the display unit 204.

As illustrated in FIG. 18, on the print completion screen, a message PM2 indicating the print completion, a display field FC41 for the information on the sales period, a display field FC42 for the printed image, a display field FC43 for a reaction button, a display field FC44 for the information on the seller, a display field FC45 for the comment, an album button FB41, and the like are displayed.

The display field FC41 for the information on the sales period displays the information on the sales period for the printed image.

A predetermined frame FC42f is displayed in the display field FC42 for the printed image, and a printed image FC42i is displayed in the frame FC42f. The frame FC42f is composed of an image that simulates the frame of the instant film.

A selectable reaction button is displayed in the display field FC43 for the reaction button. The reaction button is a button with which the purchaser (second user) can express a feeling as the reaction to the printed image. The purchaser taps the reaction button of the image corresponding to the feeling to be expressed.

The display field FC33 for the information on the seller is a field in which the information on the seller is displayed. In this example, the name of the seller and the icon image of the seller are displayed.

In the display field FC45 for the comment, the comment added to the printed image (the comment input by the purchaser in a case of the uploading) is displayed.

The album button FB41 is a button that issues an instruction to activate the album. In the album, the images printed by the second user in the past are stored. The second user can view the images printed in the past in the album.

On the print completion screen, a part of the background is displayed in a predetermined color. The displayed color is a color selected by the seller of the printed image data in a case where the image data is uploaded.

### [Function of Sales Server]

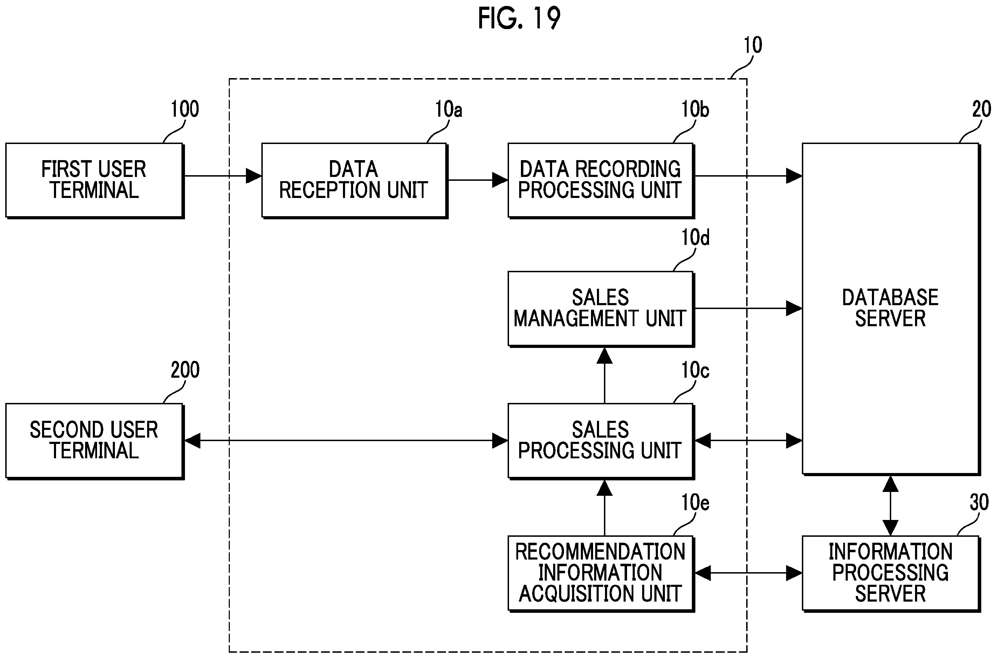

FIG. 19 is a block diagram of the main functions of the sales server.

The sales server 10 mainly performs processing of receiving, publishing, and selling the image data. As illustrated in FIG. 19, the sales server 10 has the functions of a data reception unit 10a, a data recording processing unit 10b, a sales processing unit 10c, a sales management unit 10d, a recommendation information acquisition unit 10e, and the like. The functions of the respective units are achieved by the processor 11 executing a predetermined program.

The data reception unit 10a performs processing of receiving the provision of the image data from the first user terminal 100. Specifically, processing of receiving the image data uploaded from the first user terminal 100 and the sales setting information thereof is performed.

The data recording processing unit 10b performs processing of recording the image data uploaded from the first user terminal 100 and the sales setting information thereof in the database server 20. The uploaded image data and the sales setting information thereof are recorded in the database server 20 in association with identification information (user account) of the user who performs the uploading.

The sales processing unit 10c performs processing of publishing the image data recorded in the database server 20 and selling the image data as the image data for printing. As described above, the published image data is viewed and purchased through the second user terminal 200.

The image data for printing does not always have to be the image data itself uploaded by the first user (seller). For example, the image data for printing may be the image data uploaded by the first user that is resized (that is, the resolution and/or the size is changed). Further, the image data for printing may be converted into an image format that can be printed by the printer 300.

The sales management unit 10d performs processing of collecting information on the image data that is sold as the sales information and recording the information in the database server 20 when the image data is sold. A so-called point of sales (POS) is performed. The sales information includes information on the sold image data, information on the sales price, information on the sales date and time, and the like. Further, the sales information can also include information on the purchaser (second user). The information on the purchaser includes, for example, information on the age, the gender, the residence, the number of purchases, and the like of the purchaser. The information on the purchaser can be used, for example, information input by the purchaser in a case of applying for use of the system (in a case of issuing the account). These pieces of information are recorded in the database server 20 for each user (second user).

The recommendation information acquisition unit 10e performs processing of acquiring recommendation information from the information processing server 30. Here, the "recommendation information" refers to information on the action, the setting, and the like that are recommended to promote the sale of the image data. The recommendation information is an example of second information and an example of information that contributes to promoting the sale. In the present embodiment, publication determination information is acquired as the recommendation information. The "publication determination information" refers to information on a priority order in a case where the image data on sale is displayed. That is, information on a display rank recommended for the promotion of the sale of the image data is the publication determination information. The recommendation information acquisition unit 10e acquires the publication determination information as the recommendation information. The sales processing unit 10c publishes the image data based on the publication determination information acquired as the recommendation information in a case where the image data is published. This point will be described in detail below.

### [Function of Information Processing Server]

The information processing server 30 generates the recommendation information based on various types of information recorded in the database server 20. In the present embodiment, the information processing server is an example of an information processing apparatus.

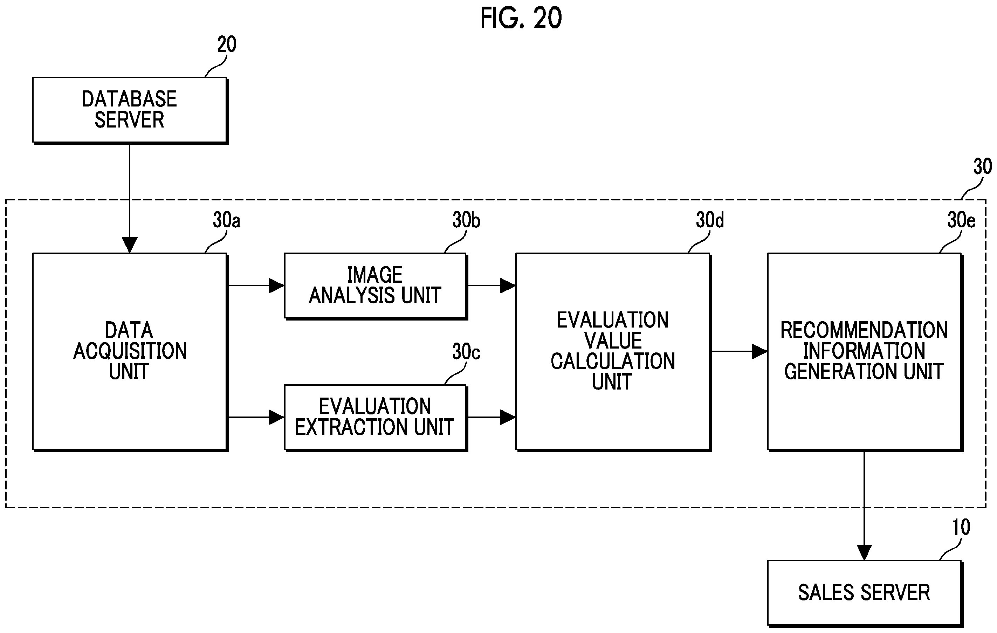

FIG. 20 is a block diagram of the main functions of the information processing server.

As illustrated in FIG. 20, the information processing server 30 has the functions of a data acquisition unit 30a, an image analysis unit 30b, an evaluation extraction unit 30c, an evaluation value calculation unit 30d, a recommendation information generation unit 30e, and the like. The functions of the respective units are achieved by the processor 31 executing a predetermined program. In the present embodiment, the program executed by the processor 31 is an example of an information processing program.

The data acquisition unit 30a acquires the image data and the sales information of the image data from the database server 20. In the present embodiment, the data acquisition unit 30a performs processing of acquiring the data (the image data and the sales information of the image data) for all the image data recorded in the database server 20. In the present embodiment, the image data recorded in the database server 20 is an example of first image data.

The image analysis unit 30b performs processing of analyzing the image data acquired by the data acquisition unit 30a and classifying the image data into a plurality of categories. As an example, in the present embodiment, the image data is classified into the plurality of categories depending on a pose of the subject. That is, the pose taken by the subject shown in the image data is recognized, and the image data is classified in accordance with the type of the pose. More specifically, the category (type of the pose) to which the image belongs is classified. For example, the pose taken by the subject, such as a pose of placing a hand on a face, a pose of placing a hand on a head, a pose of placing a hand on a waist, or a pose of turning one's back, is recognized, and the image data is classified for each type of the pose.

A so-called artificial intelligence (AI) can be adopted for the processing (image classification processing) performed by the image analysis unit 30b. Specifically, a model (trained model) that has been trained by machine learning (including deep learning) using predetermined training data can be used. In the present embodiment, the trained model that has been trained by machine learning to perform classification in accordance with the type of the pose of the subject shown in the image data can be used. The image analysis unit 30b recognizes the pose of the subject shown in the image data by using the trained model, and outputs the classification result (determination result of the category to which the image data belongs). In addition, the image recognition or image classification by AI itself is a known technique. Therefore, the detailed description thereof will be omitted.

The evaluation extraction unit 30c extracts information (evaluation information) for evaluating the image represented by the image data from the sales information of the image data. In the present embodiment, a sales amount of the image data is extracted as the evaluation information. The sales amount is calculated from the sales count and the sales price of the image data. That is, the sales amount is calculated by "sales amount = sales count × sales price". In the present embodiment, the evaluation information is an example of information on an evaluation of an image represented by the first image data. In addition, the sales information of the image data is an example of first information.

The evaluation value calculation unit 30d calculates an evaluation value for each category classified by the image analysis unit 30b based on the evaluation information extracted by the evaluation extraction unit 30c. As described above, in the present embodiment, the image data is classified in accordance with the type of the pose of the subject. Accordingly, the evaluation value is calculated for each type of the pose. In addition, as described above, in the present embodiment, the sales amount is used as the evaluation information of the image data. Therefore, the evaluation value is calculated based on the sales amount of the image data. In the present embodiment, an average value of the sales amount is calculated for each type of the classified pose, and the evaluation value for each type of the pose is calculated. That is, the average value of the sales amount of the image data belonging to each category (type of pose) is used as the evaluation value of each category. For example, in a case where there are three image data belonging to one category (type of pose) and the sales amounts of each image data are 10,000 yen, 20,000 yen, and 30,000 yen, the evaluation value is 20,000.

The recommendation information generation unit 30e generates the recommendation information based on the information on the evaluation value for each category calculated by the evaluation value calculation unit 30d. As described above, in the present embodiment, the publication determination information is generated as the recommendation information. In addition, in the present embodiment, the evaluation value for each category is calculated based on the sales amount, and the average value of the sales amount of the image data belonging to each category is used as the evaluation value for each category. The publication determination information is information on the priority order in a case where the image data on sale is displayed. This information is information on the display rank recommended for the promotion of the sale of the image data. The recommendation information generation unit 30e generates information on a display priority order recommended for the promotion of the sale of the image data based on the information on the average value of the sales amount of the image data belonging to each category. As an example, in the present embodiment, the categories are ranked in descending order of the evaluation value to generate the information on the display priority order of the categories.

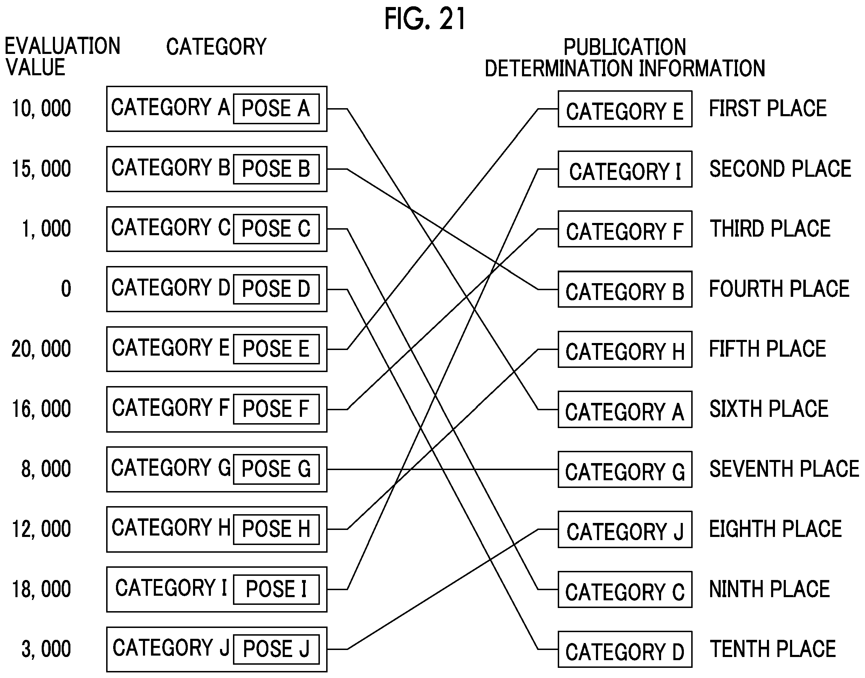

FIG. 21 is a conceptual diagram of the generation of the publication determination information.

FIG. 21 illustrates an example of a case where the image data is classified into 10 categories (category A to category J) based on the pose of the subject shown in the image data.

It is assumed that the evaluation value for the category A is 10,000, the evaluation value for the category B is 15,000, the evaluation value for the category C is 1,000, the evaluation value for the category D is 0, the evaluation value for the category E is 20,000, the evaluation value for the category F is 16,000, the evaluation value for the category G is 8,000, the evaluation value for the category H is 13,000, the evaluation value for the category I is 18,000, and the evaluation value for the category J is 3,000.

As described above, in the present embodiment, the categories are ranked in descending order of the evaluation value to generate the publication determination information. Therefore, in this example, the publication determination information is generated with the first place as the category E, the second place as the category I, the third place as the category F, the fourth place as the category B, the fifth place as the category H, the sixth place as the category A, the seventh place as the category G, the eighth place as the category J, the ninth place as the category C, and the tenth place as the category D.

In this way, the plurality of categories are sorted in descending order of the evaluation value and ranked to generate the publication determination information indicating the display priority order.

### [Publication Determination Processing]

The publication determination information generated as described above is used in a case where the image data of each seller (first user) is sold by the sales server 10. That is, the publication determination information is used in a case where the image data sold by each seller is displayed in the display field FC25 on the page (individual user information screen) of each seller.

As illustrated in FIG. 15, the image data sold by each seller is displayed in a single row along the scroll direction of the screen on the individual user information screen.

The sales processing unit 10c determines the display rank of each image data based on the publication determination information in a case where the image data of each seller is displayed on the individual user information screen, and displays the image data in the display field FC25 for the information on the image data on sale. The processing of determining the display rank of the image data is referred to as the publication determination processing.

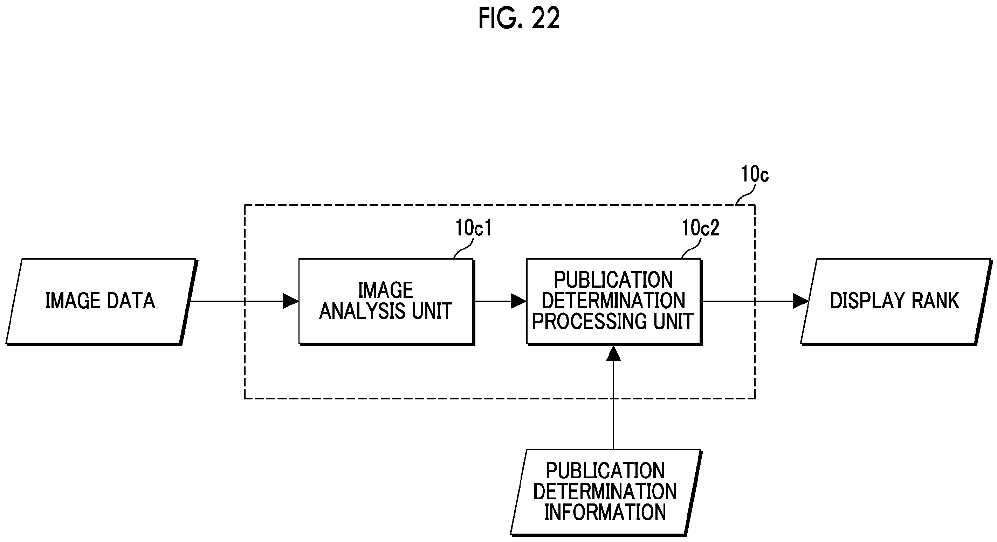

FIG. 22 is a block diagram of the main functions of the sales processing unit regarding the publication determination processing.

As illustrated in FIG. 22, the sales processing unit 10c has, mainly, functions of an image analysis unit 10c1, a publication determination processing unit 10c2, and the like regarding the publication determination processing. The functions of the respective units are achieved by the processor 11 executing a predetermined program.

The image analysis unit 10c1 performs processing of analyzing the image data and classifying the image data into the plurality of categories, as in the image analysis unit 30b of the information processing server 30. The categories to be classified are the same as those of the image analysis unit 30b of the information processing server 30. Therefore, in the present embodiment, the image data is classified into the plurality of categories in accordance with the pose of the subject.

The publication determination processing unit 10c2 performs processing of determining the display rank of the image data to be sold based on the publication determination information and the information on the classification result of the category of each image data.

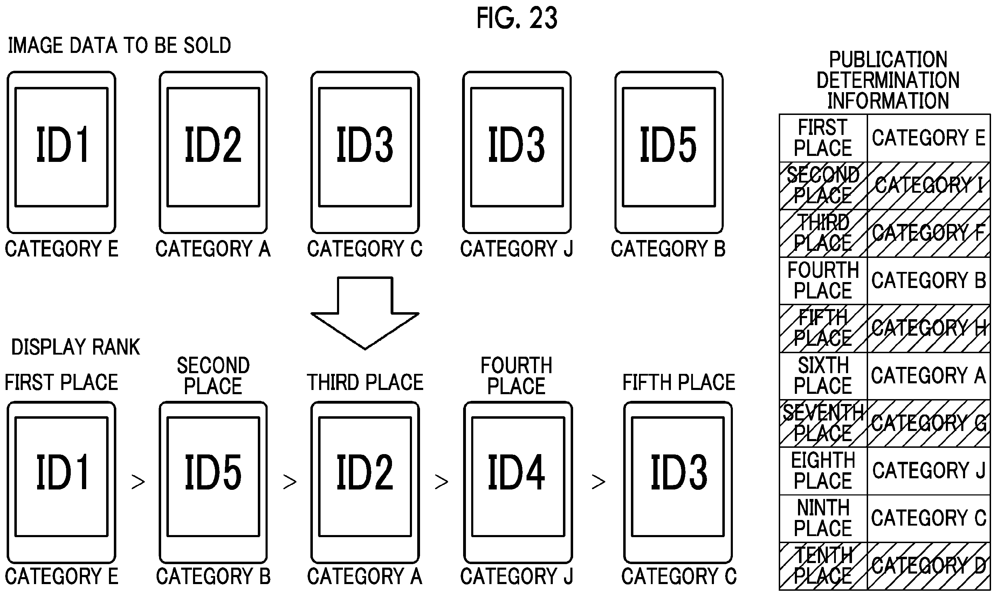

FIG. 23 is a conceptual diagram of a method for determining the display rank based on the publication determination information.

FIG. 23 illustrates an example of a case where one seller sells five image data ID1 to ID5. It is assumed that the classification result of the first image data ID1 is the category E, the classification result of the second image data ID2 is the category A, the classification result of the third image data ID3 is the category C, the classification result of the fourth image data ID4 is the category J, and the classification result of the fifth image data ID5 is the category B.

The publication determination processing unit 10c2 determines the display rank of the image data ID1 to ID5 in accordance with the information on the display priority order of each category indicated by the publication determination information. According to the example illustrated in FIG. 23, the display rank of the five image data ID1 to ID5 is set in the order of the first image data ID1, the fifth image data ID5, the second image data ID2, the fourth image data ID4, and the third image data ID3 in descending order of the priority order. Therefore, in a case where these image data ID1 to ID5 are displayed on the individual user information screen, the image data ID1 to ID5 are displayed in the order of the first image data ID1, the fifth image data ID5, the second image data ID2, the fourth image data ID4, and the third image data ID3.

As described above, in the present embodiment, the publication determination information is generated based on the sales amount of the image data belonging to each category, and is set to be displayed higher as the sales amount becomes higher. Therefore, it is expected to promote the sale by displaying the image data in accordance with the publication determination information.

### [Operation of Image Data Sales System]

Here, an operation of the publication determination of the image data sales system 1 according to the present embodiment will be described.

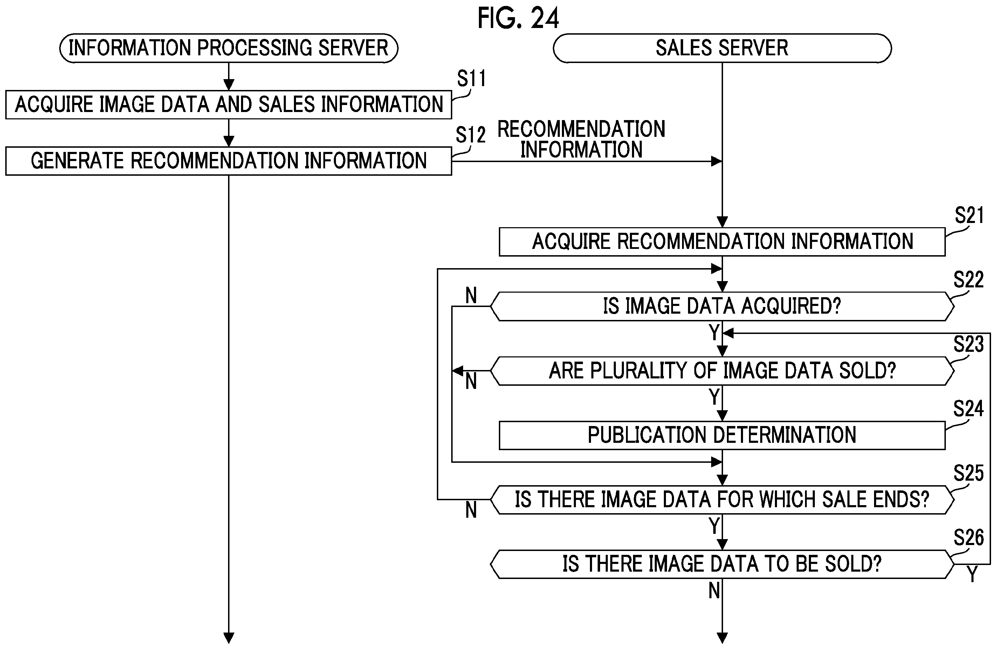

FIG. 24 is a flowchart of the operation of the publication determination.

The publication determination processing is performed by the sales server 10, but the recommendation information is generated by the information processing server 30 as preprocessing. In the present embodiment, the recommendation information is the publication determination information.

The information processing server 30 acquires the image data and the sales information of the image data from the database server 20 (step S11), and generates the recommendation information based on the acquired image data and the sales information (step S12).

In the present embodiment, the information processing server 30 analyzes the acquired image data, and classifies the image data into the plurality of categories based on the pose of the subject. The evaluation value is calculated for each category. The evaluation value is calculated by the average value of the sales amount of the image data belonging to each category. The information processing server 30 ranks the plurality of categories in descending order of the evaluation value to determine the display priority order, and generates the publication determination information (recommendation information). The priority order of the generated publication determination information is set such that the category is displayed higher as the sales amount becomes higher.

The sales server 10 acquires the recommendation information (publication determination information) from the information processing server 30 (step S21). By acquiring the recommendation information, the publication determination processing can be performed by the information processing server 30. The flow of the publication determination processing illustrated in FIG. 24 is for a specific first user (seller). That is, the publication determination processing is performed for each first user.

First, it is determined whether or not the image data is acquired (step S22). That is, it is determined whether or not the first user as the seller has uploaded the image data.

In a case where the image data is acquired, it is determined whether or not the first user who has uploaded the image data sells a plurality of image data including the uploaded image data (step S23).

In a case where the plurality of image data including the uploaded image data are sold, the publication determination processing is performed (step S24). That is, the display rank of the image data is determined based on the publication determination information that is the recommendation information.

The sales server 10 displays the information on the image data on sale to the second user terminal 200 in accordance with the determined display rank. Specifically, in a case where the information on the image data on sale is displayed in the display field FC25 for the individual user information screen, the information is displayed in accordance with the determined display rank (see FIG. 15).

In a case where the image data to be sold by the first user is one (in a case where the determination in step S23 is No), it is not necessary to set the priority order for the display, and thus the publication determination processing is not performed.

The sales server 10 determines whether or not there is the image data for which the sale ends (step S25). In a case where there is the image data for which the sale ends, the sales server 10 determines whether or not there is the image data to be sold (step S26). That is, it is determined whether or not there is the remaining image data on sale. In a case where the image data on sale is present, the processing returns to step S23, and it is determined whether or not the plurality of image data are sold. On the other hand, in a case where the image data on sale is not present, the processing ends.

As described above, with the image data sales system 1 according to the present embodiment, the publication determination information (recommendation information) is generated based on the information recorded in the database server 20, and the display rank of the image data to be sold by each first user is determined based on the generated publication determination information. The publication determination information is set to be displayed higher as the sales amount becomes higher. Therefore, it is expected to promote the sale by displaying the image data in accordance with the publication determination information.

### [Modification Example]

### [Setting of Category]

In the above embodiment, the image data is classified into the plurality of categories in accordance with the pose of the subject, but the setting of the category to be classified is not limited to this. In addition, for example, the image data may be classified into the plurality of categories in accordance with a composition, a background, a scene, or the like. That is, the composition, the background, the scene, and the like of the image represented by the image data are recognized, and the image data is classified into the plurality of categories (types of the composition, types of the background, types of the scene, and the like) in accordance with the recognized composition, background, scene, and the like. In addition, the image data may be classified into the plurality of categories by an expression, clothing, and the like of the subject. That is, the expression, the clothing, and the like of the subject are recognized, and the image data is classified into the plurality of categories (types of the expression, types of the clothing, and the like) in accordance with the recognized expression, clothing, and the like. Furthermore, the image data may be classified into the plurality of categories in accordance with a combination of these.

In addition, one image data may be classified into the plurality of categories. For example, one image data may be recognized by the pose, the clothing, the composition, the background, and the like, and classified into each category in accordance with the recognition result. In this case, one image data is classified into the plurality of categories from the viewpoint of the pose, the clothing, the composition, the background, and the like.

### [Evaluation Value]

In the above embodiment, the average value of the sales amount of the image data belonging to each category is used as the evaluation value of each category, but the value used as the evaluation value is not limited to this. The evaluation value need only be a numerical value that can be evaluated from the viewpoint of the sale. For example, the total of the sales amount of the image data belonging to each category, the average value or the total number of the sales count of image data belonging to each category, the amount of purchase per person (amount of purchase by one second user) of the image data belonging to each category, or the like can also be adopted as the evaluation value.

Further, the evaluation value may be calculated by weighting. For example, the information on the evaluation can be weighted by using the information on the subject and/or a person who captures the image. In this case, for example, the evaluation value of each category is calculated by weighting the sales amount (information on the evaluation) of each image data by the subject and/or the person who captures the image. The information on the subject and/or the person who captures the image is included in, for example, the sales setting information of the image data, and is acquired from the first user during the uploading.

In addition, the evaluation value may be calculated from the viewpoint of a period from the start of the sale of the image data to the purchase of the image data. That is, the evaluation value of each category is calculated by calculating a time taken from the start of the sale to the purchase as the evaluation of the image, and calculating the average value thereof. That is, the evaluation becomes higher as the time becomes shorter. That is, since it is assumed that the demand becomes higher as the time from the start of the sale to the purchase becomes shorter, a high evaluation is obtained.

In addition, the evaluation of the image may be calculated by a time taken for selling a predetermined number of image data.

### [Publication Determination Information]

In the above embodiment, the publication determination information is generated for all the image data recorded in the database server 20, but the publication determination information may be generated for each user. That is, the publication determination information may be generated for each first user. In this case, the publication determination information is generated based on the image data sold by the first user and the sales information of the image data. The image data and the sale data thereof include both the image data that has been sold in the past by the first user and the image data on sale. By generating the publication determination information for each first user, the publication determination information suitable for each first user can be generated. That is, the publication determination information can be generated based on the sales trend of each first user.

In addition, the image data may be grouped based on a plurality of viewpoints, and the publication determination information may be generated for each group. For example, the image data can be divided into a plurality of groups in accordance with the attribute (age, gender, occupation, and the like) of the first user who sells the image data, and the publication determination information can be generated for each group. In addition, the image data can be divided into a plurality of groups in accordance with the attribute of the second user who has purchased the image data, and the publication determination information can be generated for each group. In a case where a plurality of pieces of publication determination information are generated in accordance with the attribute of the second user who has purchased the image data, it is preferable that the first user can select the publication determination information to be used. As a result, the display rank can be set to be more suitable for the main purchasing group. Furthermore, the image data can be divided into a plurality of groups in accordance with the date and time (month, day, time) at which the image data is purchased, and the publication determination information can be generated for each group.

Further, the publication determination information can be generated by using the artificial intelligence. For example, in a case where the image data is classified into the plurality of viewpoints (pose, clothing, composition, background, and the like), the publication determination information in which the viewpoints are combined can be generated by using the artificial intelligence. Specifically, the image data is classified from the viewpoints of the pose, the clothing, the composition, the background, and the like, and the combination (combination of the pose, the clothing, the composition, the background, and the like) to be recommended is generated by the artificial intelligence based on the classification result and the evaluation value. A plurality of combinations are generated, ranked, and then used as the publication determination information.

### [Use Form of Publication Determination Information]

In the above embodiment, a case has been described in which the display rank of the image data is determined such that the image data is displayed in the order of the categories having a high priority order in accordance with the display priority order indicated by the publication determination information, as the method for using the publication determination information. The method for using the publication determination information is not limited to this.

The display rank of the image data may be determined such that the image data is displayed in the order of the categories having a low priority order. As described above, by displaying the image data in the order of the categories having a low priority order (the order of the categories having a low sales), it is possible to level out the sales.

### [Method for Selling Image Data]

In the above embodiment, a case has been described in which the image data is sold for the limited period, but the image data may be sold for an unlimited period. In addition, in a case where the sales period is limited, the sale may be limited to a very short time. For example, the sale may be limited to 10 minutes.

In a case where the image data is sold for the limited period, the publication determination information generated as the recommendation information can be generated from the viewpoint of the date and time. For example, the publication determination information is generated from a viewpoint of a time slot in which the image data is sold, the sales month, the sales day, the sales weekday (weekday or holiday), and the like.

In a case where the publication determination information is generated for each time slot, the average value of the sales amount of the image data belonging to each category is calculated for each time slot. Then, the display priority order of each category is determined based on the obtained average value of the sales amount. As a result, the publication determination information can be generated for each time slot. The method for dividing the time slot is not particularly limited. In this example, the calculation of the average value of the sales amount of the image data belonging to each category for each time slot is an example of generating statistical information on the evaluation based on the sales date and time for each category. The publication determination information for each sales month, the publication determination information for each sales day, the publication determination information for each sales weekday, and the like can be generated in the same manner.

As described above, by generating the publication determination information from the viewpoint of the date and time, the optimal display setting can be performed in accordance with the date and time at which the image data is sold. For example, the optimal display setting can be performed in accordance with the time (morning, noon, night, and the like) at which the image data is sold, the month (season) at which the image data is sold, the day (Christmas, Valentine's Day, and the like) at which the image data is sold, and the like.

In a case where the publication determination information is generated from the viewpoint of the date and time as described above, the display rank can be dynamically changed in accordance with the date and time of the sale.

In addition, in a case where the image data is sold for the limited period, the publication determination information may be generated from the viewpoint of the period from the start of the sale of the image data to the purchase of the image data. That is, the publication determination information is generated by using the time taken from the start of the sale to the purchase as the evaluation of the image data and using the average value of the time as the evaluation value of each category. As a result, the display can be performed in accordance with sales characteristics of the image data (good sales immediately after the start of the sale, good sales at the end of the sale, sells gradually, sells all at once, and the like).

### [Display of Image Data on Sale]

In the above embodiment, a case has been described in which the information on the image data on sale is displayed in a single row along the scroll direction of the screen in a case where the second user terminal 200 is the smartphone. The method for displaying the information on the image data on sale is not limited to this. It is preferable to set the screen size or the like as appropriate. For example, the information on the image data may be displayed in a plurality of rows along the scroll direction or the vertical direction of the screen. In this case, for example, the information on the image data is displayed in order from the upper left of the screen to the right. In a case where the edge of the screen is reached, the display moves down one row, and the image data information is displayed in order from left to right on the screen in the same manner.

### [Second Embodiment]

In the above embodiment, a case has been described in which the information (publication determination information) on the priority order in a case of displaying the image data on sale is generated as the recommendation information.

In the present embodiment, the information on the image recommended for the sale is generated as the recommendation information, and is provided to the first user.

Hereinafter, as an example, a case will be described in which information on a recommended pose (recommended pose information) is generated as the information on the image recommended for the sale.

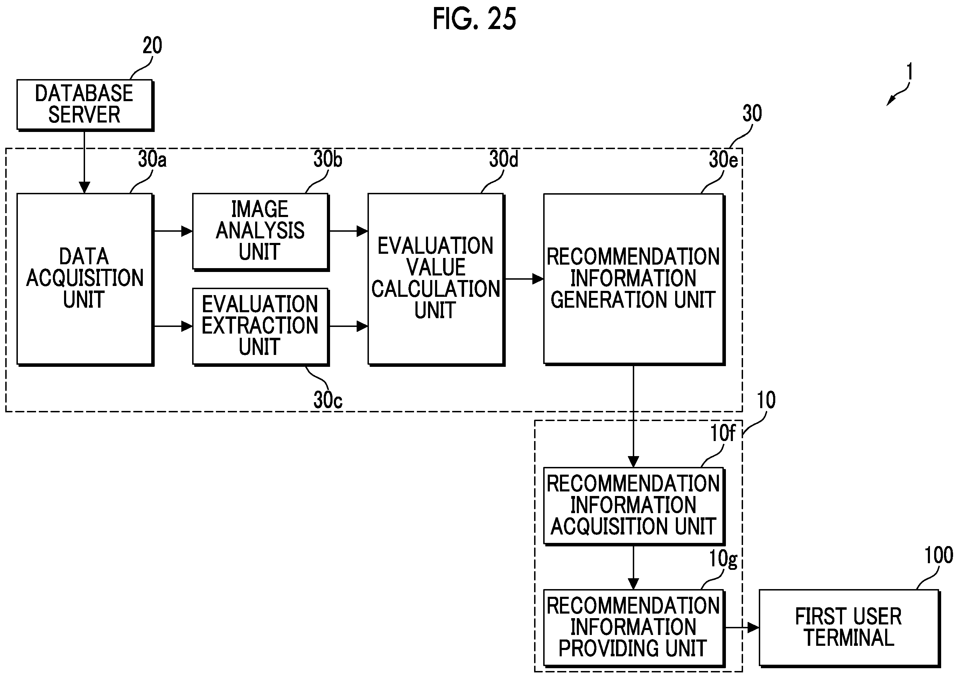

FIG. 25 is a main block diagram of the functions of the image data sales system regarding the generation and the provision of the recommendation information.

As illustrated in FIG. 25, in the image data sales system 1 according to the present embodiment, the information processing server 30 generates the recommendation information (recommended pose information). The generated recommendation information is transmitted to the first user terminal 100 via the sales server 10, and is presented to the first user. That is, the recommendation information is displayed on the display unit 104 of the first user terminal 100.

### [Generation of Recommendation Information]

As in the first embodiment, the information processing server 30 has the functions of the data acquisition unit 30a, the image analysis unit 30b, the evaluation extraction unit 30c, the evaluation value calculation unit 30d, the recommendation information generation unit 30e, and the like.

The data acquisition unit 30a acquires the image data and the sales information of the image data from the database server 20.

The image analysis unit 30b performs the processing of analyzing the image data acquired by the data acquisition unit 30a and classifying the image data into the plurality of categories. In the present embodiment, the image data is classified into the plurality of categories in accordance with the pose of the subject.

The evaluation extraction unit 30c extracts the information (evaluation information) for evaluating the image represented by the image data from the sales information of the image data. In the present embodiment, the sales amount of the image data is extracted as the evaluation information.

The evaluation value calculation unit 30d calculates the evaluation value for each category classified by the image analysis unit 30b based on the evaluation information extracted by the evaluation extraction unit 30c. In the present embodiment, the evaluation value is calculated for each type of the pose.

The recommendation information generation unit 30e generates the recommendation information based on the information on the evaluation value for each category calculated by the evaluation value calculation unit 30d. In the present embodiment, the recommended pose information as the recommendation information is generated based on the information on the evaluation value for each type of the pose.

The recommended pose information is composed of information in which the poses classified into a plurality of types are ranked in descending order of the evaluation value. In the present embodiment, the ranking is performed in descending order of the average value of the sales amount.

### [Provision of Recommendation Information]

As illustrated in FIG. 25, the sales server 10 has the functions of a recommendation information acquisition unit 10f, a recommendation information providing unit 10g, and the like regarding the provision of the recommendation information.

The recommendation information acquisition unit 10f performs processing of acquiring the recommendation information (recommended pose information in the present embodiment) generated by the information processing server 30 from the information processing server 30.

The recommendation information providing unit 10g performs processing of providing the recommendation information acquired from the information processing server 30 to the first user terminal 100. In the present embodiment, the recommendation information providing unit 10g provides (transmits) the recommendation information to the first user terminal 100 in response to a request for information provision from the first user terminal 100.

The recommendation information, which is provided from the sales server 10, is displayed on the display unit 104 of the first user terminal 100 in a predetermined display format.

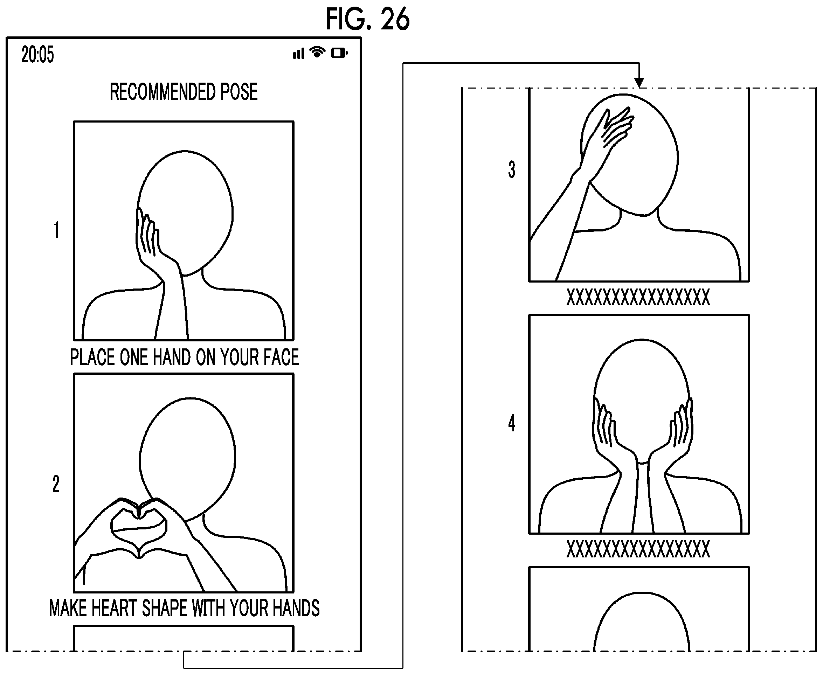

FIG. 26 is a diagram illustrating an example of display of the recommendation information on the first user terminal.

The information on the recommended pose is displayed in the order of the rank indicated in the recommendation information as the recommended pose. FIG. 26 illustrates an example of a case where an illustration showing the pose together with the type of the pose is displayed. In this case, the recommendation information including information on the illustration is provided to the first user terminal 100. An actual photo may be displayed instead of the illustration.

The information on the recommended pose is displayed in order along the scroll direction of the screen. In the example illustrated in FIG. 26, the information on the recommended pose is displayed in order from the first place by scrolling the screen from the bottom to the top.

As described above, in the image data sales system according to the present embodiment, the information (in the above example, the information on the pose recommended for the sale) on the image recommended for the sale is generated as the recommendation information and is provided to the first user. The first user can sell the image data (image data having a large sales expected value) that is likely to be purchased by capturing the image based on the provided recommendation information to sell the image.

### [Modification Example]

### [Recommendation Information]

In the above embodiment, a case has been described in which the information on the recommended pose is generated as the recommendation information, but the information generated as the recommendation information is not limited to this. For example, the recommendation information can be generated from the viewpoint of the composition, the background, the scene, the expression, the clothing, and the like. Further, the recommendation information in which a plurality of viewpoints are combined can be generated. For example, information on the combination of the recommended pose and the composition can be generated as the recommendation information. In this case, for example, the pose and composition of which the evaluation value is equal to or greater than a threshold value or the rank of the evaluation value is equal to or higher than a threshold value are extracted, and the extracted pose and composition are combined to be generated as the recommendation information.

### [Generation of Recommendation Information Using Artificial Intelligence]

The recommendation information can also be generated using the artificial intelligence. In particular, in a case where the image data is classified from the plurality of viewpoints, the information on the combination to be recommended can be generated as the recommendation information using the artificial intelligence (use of so-called generative AI). For example, in a case where the image data is classified in accordance with the pose and composition, the combination of the recommended pose and composition can be generated using the artificial intelligence based on the evaluation value of the pose and the evaluation value of the composition. More detailed information can be generated by adding elements such as the background, the expression, and the clothing. Furthermore, information corresponding to the timing can be generated by adding the element of the date and time.

A plurality of pieces of recommendation information can also be generated by using the artificial intelligence. In this case, it is preferable to generate the plurality of pieces of recommendation information by ranking.

In addition, it is preferable that the resulting information is output as the information on the image. For example, in a case where the combination of the recommended pose and composition is output, an image in which the pose and the composition are shown as examples is generated and output. Alternatively, an image of the similar content is output.

The recommendation information may also be generated as information used in a case of selling or publishing a video. In this case, for example, information on a change of the recommended pose is generated as the recommendation information.

### [Recommendation Information in Case of Plurality of Subjects]

For example, in a case of capturing an image in which a plurality of persons are included in an angle of view, such as group imaging, it is preferable to generate the recommendation information in accordance with the number of persons. That is, the recommendation information including the recommended composition in accordance with the number of persons to be imaged, the recommended pose for each person, and the like is generated. For example, in a case of capturing an image of a group of three persons, the information on the disposition (composition) of each person and the information on the pose of each person are generated as the recommendation information. In such a case, for example, the information on the number of persons to be imaged is acquired from the first user via the first user terminal 100.

### [Provision of Recommendation Information]

In a case where a plurality of pieces of information on the recommended pose, the composition, and the like are generated as the recommendation information, the information provided to the first user may be limited to a certain number. For example, in a case of ranking, the top n pieces of information are presented to the first user. The first user may be able to arbitrarily set the number n (threshold value) for display. In addition, a configuration may be adopted in which only the information of which the evaluation value is equal to or greater than the threshold value is provided to the first user.

In addition, a configuration may be adopted in which the information on the sold image data (including the image data on sale) is acquired for each first user, and the information on the unsold (uncaptured) image data is provided. For example, in a case where the information on the recommended pose or composition is generated as the recommendation information, the first user extracts the information on the unsold pose or composition from among the plurality of pieces of generated information on the pose or composition, and provides the information to the first user. In addition, for example, in a case where the information on the combination of the recommended pose and composition is generated as the recommendation information, the first user extracts the information on the unsold combination of the pose and the composition from among the plurality of pieces of information on the combination of the pose and the composition that are generated, and provides the information to the first user. The information on the sold image data is acquired from, for example, the database server 20. In a case of extracting the unsold image data, a configuration may be adopted in which the image data is extracted from the image data of which the evaluation value is equal to or greater than the threshold value or the rank of the evaluation value is equal to or higher than the threshold value.

In addition, the first user may acquire the information on the sold image data, and provide the first user with the pose and/or composition unsold by the first user as the recommendation information regardless of the evaluation value.

### [Others]

The configurations and the modification examples illustrated in the first embodiment can be applied to the present embodiment as appropriate.

### [Third embodiment]

A technique (collage) of combining the plurality of images to generate one image is known. The generated image is referred to as a collage image.

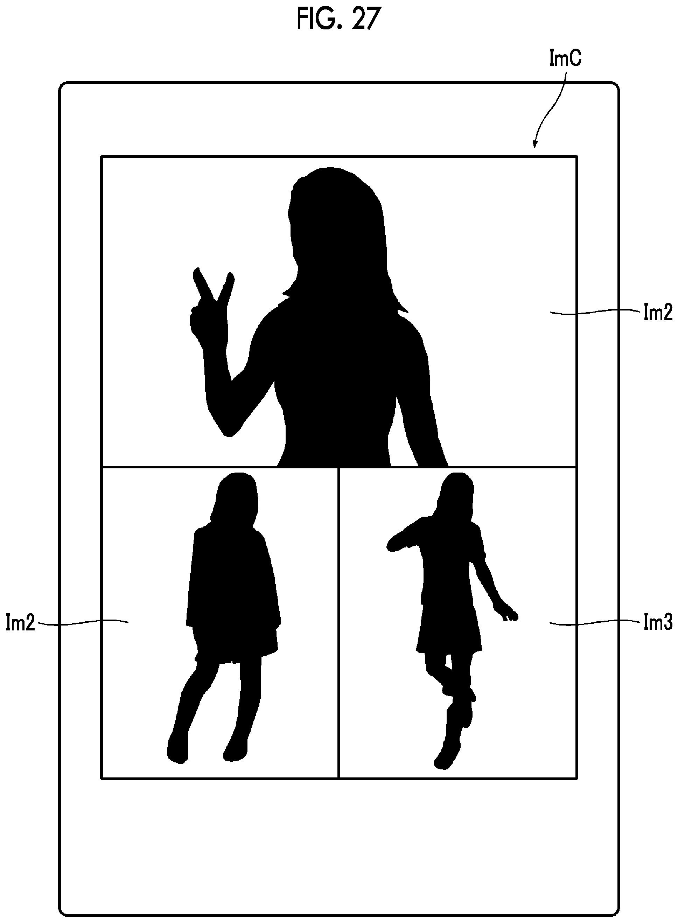

FIG. 27 is a diagram illustrating an example of the collage image. In particular, FIG. 27 illustrates an example of a case where the collage image is printed on the instant film (collage printing).

FIG. 27 illustrates an example of generating one collage image ImC by combining three images Im1, Im2, and Im3. Each of the images Im1, Im2, and Im3 is displayed in a frame divided in advance, and one collage image ImC is generated.

In the present embodiment, in a case where the first user sells the collage image, the information on the recommended collage image is generated as the recommendation information.

### [Generation of Recommendation Information]

Here, as an example, a case will be described in which the information (recommendation information) on the collage image recommended from the viewpoint of the pose is generated.

As in the second embodiment, the information processing server 30 has the functions of the data acquisition unit 30a, the image analysis unit 30b, the evaluation extraction unit 30c, the evaluation value calculation unit 30d, the recommendation information generation unit 30e, and the like (see FIG. 25).

The data acquisition unit 30a acquires the image data and the sales information of the image data from the database server 20.

The image analysis unit 30b performs the processing of analyzing the image data acquired by the data acquisition unit 30a and classifying the image data into the plurality of categories. In the present embodiment, the image data is classified into the plurality of categories in accordance with the pose of the subject.

The image analysis unit 30b determines whether or not the image data is the image data of the collage image. In a case where the image data is the image data of the collage image, the image analysis unit 30b further classifies the image data into the plurality of categories from the viewpoint of the form of the collage (for example, the division form of the frame). In the present embodiment, the image data of the collage image is classified into the plurality of categories from the viewpoint of the division form of the frame (upper and lower halves, left and right halves, upper and lower thirds, and the like).

The evaluation extraction unit 30c extracts the information (evaluation information) for evaluating the image represented by the image data from the sales information of the image data. In the present embodiment, the sales amount of the image data is extracted as the evaluation information.

The evaluation value calculation unit 30d calculates the evaluation value for each category classified by the image analysis unit 30b based on the evaluation information extracted by the evaluation extraction unit 30c. In the present embodiment, the evaluation value is calculated for each type of the pose and each division form of the frame.

The recommendation information generation unit 30e generates the recommendation information based on the information on the evaluation value (information on the evaluation value for each type of the pose and information on the evaluation value for each division form of the frame) calculated by the evaluation value calculation unit 30d. Specifically, the information on the recommended division form of the frame and the information on the combination of the pose are generated as the recommendation information. For example, the division form of the frame having the highest evaluation value and the information on the pose of the number corresponding to the number of divisions of the frame are generated as the recommendation information. The information on the pose is selected in descending order of the evaluation value. A plurality of pieces of recommendation information can also be generated.

### [Provision of Recommendation Information]

The sales server 10 has the functions of the recommendation information acquisition unit 10f, the recommendation information providing unit 10g, and the like regarding the provision of the recommendation information (see FIG. 25).

The recommendation information acquisition unit 10f performs the processing of acquiring the recommendation information (information on the recommended collage image) generated by the information processing server 30 from the information processing server 30.

The recommendation information providing unit 10g performs the processing of providing the recommendation information acquired from the information processing server 30 to the first user terminal 100. The recommendation information providing unit 10g provides (transmits) the recommendation information to the first user terminal 100 in response to the request for information provision from the first user terminal 100.

The recommendation information, which is provided from the sales server 10, is displayed on the display unit 104 of the first user terminal 100 in a predetermined display format.

As described above, with the image data sales system according to the present embodiment, in a case where the first user sells the collage image, the information on the recommended collage image can be provided to the first user. The first user can sell the image data of the collage image that is likely to be purchased, by creating the collage image based on the provided recommendation information.

### [Modification Example]

### [Recommendation Information]

In the above embodiment, a case has been described in which the information on the collage image recommended from the viewpoint of the pose is generated, but the information generated as the information on the collage image recommended (recommendation information) is not limited to this. Additionally, for example, the information on the collage image recommended from the viewpoint of the composition, the background, the scene, the expression, the clothing, and the like can be generated. In addition, the information on the collage image recommended can be generated by combining the plurality of viewpoints.

In addition, the information on the combination of the pose or the like is basically combined with the information having a high evaluation value, but may be generated by intentionally combining the information having a low evaluation value.

In addition, in the above embodiment, the configuration has been adopted in which the information on the recommended division form of the frame and the information on the combination of the pose are generated as the recommendation information, but a configuration may be adopted in which only one information is generated. For example, a configuration may be adopted in which only the information on the recommended division form of the frame is generated, and a configuration may be adopted in which only the information on the combination of the pose is generated.

For example, the information on the division form of the frame to be used may be received from the first user, and the information on the combination of the recommended pose or the like for the received division form of the frame may be generated as the recommendation information.

Similarly, the image data used for the collage image may be received from the first user, and the information on the recommended division form of the frame may be generated as the recommendation information for the received image data. In this case, the image data received from the first user is analyzed, and the information on the recommended division form of the frame is generated.

In addition, a configuration can also be adopted in which the plurality of image data are received from the first user to automatically generate the recommended collage image. In this case, the recommended collage image may be generated using all of the received image data, and the recommended collage image may be generated using a part of the image data.

### [Generation of Recommendation Information Using Artificial Intelligence]

The information on the recommended collage image can also be generated using the artificial intelligence. For example, in a case where the plurality of image data are input, the information on the recommended collage image can be generated using a model that automatically generates the collage image having a large sales expected value. In this case, for example, machine learning is performed using the image data of the collage image recorded in the database server 20 and the sales information (particularly, the information on the sales) thereof to generate the model.

In addition, a configuration can also be adopted in which the plurality of image data are received to automatically generate the recommended collage image using the trained model.

### [Others]

The configurations and the modification examples illustrated in the first or second embodiment can be applied to the present embodiment as appropriate.

### [Other Embodiments]

### [System Configuration]

The first user terminal 100 and the second user terminal 200 may be computers that can communicate with the sales server 10 via the network 2. Therefore, the first user terminal 100 and the second user terminal 200 are not always mobile computers.

In addition, in the above embodiment, as an example, a case has been described in which a printer that prints the image on the instant film is used as the printer 300, but the type of the printer 300 is not limited to this. In addition, for example, a printer that prints an image on a recording medium by an ink jet method, a thermal method, and the like can also be used. In addition, the printer 300 is not always a portable type, and a so-called stationary type printer may be used.

Further, the connection form between the printer 300 and the second user terminal 200 may be wired or wireless.

### [Hardware Configuration of Each Server]

The functions of each server are achieved by various processors. The various processors include a CPU and/or a graphic processing unit (GPU), which is a general-purpose processor that executes a program to function as the various processing units, a programmable logic device (PLD), which is a processor whose circuit configuration can be changed after manufacture, such as a field programmable gate array (FPGA), and a dedicated electric circuit, which is a processor having a circuit configuration that is designed for exclusive use in order to perform specific processing, such as an application specific integrated circuit (ASIC). The program is synonymous with software.

One processing unit may be configured by one of these various processors or two or more processors of the same type or different types. For example, one processing unit may be configured by a plurality of FPGAs or a combination of a CPU and an FPGA. A plurality of processing units may be configured by one processor. As a first example in which the plurality of processing units are configured by one processor, there is a form in which one processor is configured by a combination of one or more CPUs and the software, and this processor functions as the plurality of processing units, as represented by a computer used in a client or a server. Second, as represented by a system on a chip (SoC) or the like, there is a form in which a processor, which implements the functions of the entire system including the plurality of processing units with one integrated circuit (IC) chip, is used. Various processing units are configured by one or more of the various processors as the hardware structure, as described above.

In addition, in the above embodiment, the configuration has been adopted in which each processing is performed by three servers (sales server 10, database server 20, and information processing server 30), but the entire processing may be performed by one server. In addition, a configuration may be adopted in which a part of the processing is performed by the first user terminal 100 or the second user terminal 200.

In addition, the functions of each server can also be achieved by a so-called cloud computer.

### [Others]

The configurations and the functions described in each of the above embodiments can be combined as appropriate.

In addition, in the above embodiment, as an example, a case has been described in which the present invention is applied to a system that sells the image data for printing online, but the application of the present invention is not limited to this. The present invention can also be applied to a system that simply sells the image data. In addition, the present invention can also be applied to a system that provides the image data (including the image data for printing) for free (including partially free).

In addition, the trade of the image data is not limited to a case where general currency is used, and includes a case where trade is performed using virtual currency (including so-called points and the like). For example, a configuration may be adopted in which points equivalent to the currency are issued and the image data is purchased using the points.

### Explanation of References

10: sales server
10a: data reception unit
10b: data recording processing unit
10c: sales processing unit
10c1: image analysis unit
10c2: publication determination processing unit
10d: sales management unit
10e: recommendation information acquisition unit
10f: recommendation information acquisition unit
10g: recommendation information providing unit
11: processor
12: main storage unit
13: auxiliary storage unit
14: operation unit
15: display unit
16: interface unit
20: database server
21: processor
22: main storage unit
23: auxiliary storage unit
24: operation unit
25: display unit
26: interface unit
30: information processing server
30a: data acquisition unit
30b: image analysis unit
30c: evaluation extraction unit
30d: evaluation value calculation unit
30e: recommendation information generation unit
31: processor
32: main storage unit
33: auxiliary storage unit
34: operation unit
35: display unit
36: interface unit
100: first user terminal
100a: image data acquisition unit
100b: sales setting information reception unit
100c: upload processing unit
101: processor
102: main storage unit
103: auxiliary storage unit
104: display unit
105: operation unit
106: GPS reception unit
107: camera unit
108: audio input unit
109: audio output unit
110: communication unit
111: short-range wireless communication unit
112: sensor unit
200: second user terminal
200a: viewing processing unit
200b: purchase processing unit
200c: download processing unit
200d: print processing unit
201: processor
202: main storage unit
203: auxiliary storage unit
204: display unit
205: operation unit
206: GPS reception unit
207: camera unit
208: audio input unit
209: audio output unit
210: communication unit
211: short-range wireless communication unit
212: sensor unit
300: printer
301: control unit
302: print unit
302a: film loading chamber
302b: film feeding mechanism
302c: film transport mechanism
302d: print head
303: short-range wireless communication unit
304: operation unit
310: film pack
400: photo (printed material)
FB11: search button
FB21: profile button
FB31: print button
FB41: album button
FC11: display field for user
FC12: display field for user being followed
FC21: display field for information on seller
FC22: display field for profile image
FC23: information display field for information on sales count and follower count
FC24: display field for message
FC25: display field for information on image data on sale
FC25i: information on image data on sale
FC25i1: image represented by image data on sale
FC25i2: information on sales period of image data on sale
FC25i3: information on sales price of image data on sale
FC25i4: information on comment added to image data on sale
FC25iF: frame
FC31: display field for information on sales period
FC32: display field for image represented by image data
FC32f: frame
FC32i: image represented by image data
FC33: display field for information on seller
FC34: display field for comment
FC35: display field for information on sales price
FC41: display field for information on sales period
FC42: display field for printed image
FC42f: frame
FC42i: printed image
FC43: display field for reaction button
FC44: display field for information on seller
FC45: display field for comment
IB21: button
IB22: button
IB23: button
IB31: button
IB32: button
IB41: button
IC11: display field for image represented by image data to be sold
IC11f: frame
IC11i: image represented by image data to be sold
IC12: input field for information on color
IC13: input field for comment
IC14: input field for sales period
IC15: input field for sales price
ID1: first image data
ID2: second image data
ID3: third image data
ID4: fourth image data
ID5: fifth image data
Im1: image
Im2: image
Im3: image
ImC: collage image
LA1: animation showing that printing is in progress
PM1: message indicating that printing is in progress
PM2: message indicating that printing is completed
U1: first user
U2: second user

## Claims

1. An information processing apparatus comprising:
a processor configured to:
acquire first image data and first information including information on an evaluation of an image represented by the first image data;
analyze the first image data and classify the first image data into a plurality of categories;
calculate an evaluation value for each of the categories based on the first information; and
generate second information of second image data based on the evaluation value.

2. The information processing apparatus according to claim 1,
wherein the second information is information that contributes to promoting sale.

3. The information processing apparatus according to claim 2,
wherein the first information includes that the image represented by the first image data is viewed, selected, or added to a cart.

4. The information processing apparatus according to claim 2,
wherein the evaluation is given such that a higher evaluation is given as a period from start of the sale of the image represented by the first image data to purchase of the image represented by the first image data becomes shorter.

5. The information processing apparatus according to claim 1,
wherein the first information includes information on sales amount as the information on the evaluation.

6. The information processing apparatus according to claim 5,
wherein the evaluation value is an average value of the sales amount.

7. The information processing apparatus according to any one of claims 1 to 6,
wherein the first information includes information on a subject and/or a person who captures an image, and
the processor is configured to calculate the evaluation value by weighting the information on the evaluation based on the information on the subject and/or the person who captures the image.

8. The information processing apparatus according to any one of claims 1 to 6,
wherein the second information is information on a priority order of publication in a case where a plurality of the second image data are sold.

9. The information processing apparatus according to claim 8,
wherein the first information includes information on a sales date and time, and
the processor is configured to:
generate statistical information on the evaluation based on the sales date and time for each of the categories; and
generate the second information based on the statistical information on the evaluation.

10. The information processing apparatus according to any one of claims 1 to 6,
wherein the categories are classified based on compositions and/or poses, and
the second information is information on a recommended composition and/or pose.

11. The information processing apparatus according to claim 10,
wherein the processor is configured to:
extract a composition and/or pose of which the evaluation value is equal to or greater than a threshold value or a rank of the evaluation value is equal to or greater than a threshold value; and
generate information on the extracted composition and/or pose as the second information.

12. The information processing apparatus according to claim 11,
wherein the processor is configured to:
acquire information on a sold composition and/or pose; and
generate information on an unsold composition and/or pose from the extracted composition and/or pose as the second information.

13. The information processing apparatus according to claim 10,
wherein the processor is configured to:
extract a composition and pose of which the evaluation value is equal to or greater than a threshold value or a rank of the evaluation value is equal to or greater than a threshold value; and
generate information obtained by combining the extracted composition and pose as the second information.

14. The information processing apparatus according to claim 10,
wherein the processor is configured to:
acquire information on the number of persons to be imaged at once;
extract a composition and/or pose of which the evaluation value is equal to or greater than a threshold value or a rank of the evaluation value is equal to or greater than a threshold value; and
generate information on a composition and/or pose corresponding to the number of persons based on information on the extracted composition and/or pose as the second information.

15. The information processing apparatus according to any one of claims 1 to 6,
wherein the categories are classified based on compositions and/or poses, and
the second information is information on combinations of compositions and/or poses in a case where a collage image is generated.

16. An information processing method comprising:
acquiring first image data and first information including information on an evaluation of an image represented by the first image data;
analyzing the first image data and classifying the first image data into a plurality of categories;
calculating an evaluation value for each of the categories based on the first information; and
generating second information of second image data based on the evaluation value.

17. An information processing program causing a computer to execute:
a function of acquiring first image data and first information including information on an evaluation of an image represented by the first image data;
a function of analyzing the first image data and classifying the first image data into a plurality of categories;
a function of calculating an evaluation value for each of the categories based on the first information; and
a function of generating second information of second image data based on the evaluation value.

18. A non-transitory computer-readable recording medium on which the program according to claim 17 is recorded.
